Europäisches Patentamt

European Patent Office

Office européen des brevets

(19)

(11) Publication number: **0 291 252**
**A2**

## (12) EUROPEAN PATENT APPLICATION

(21) Application number: 88304161.8

(22) Date of filing: 09.05.88

(51) Int. Cl.⁴: **H04N 3/12**

(30) Priority: 12.05.87 JP 115417/87
21.05.87 JP 124919/87
21.07.87 JP 181332/87
30.09.87 JP 247461/87

(43) Date of publication of application:
**17.11.88 Bulletin 88/46**

(84) Designated Contracting States:
**DE FR GB**

(71) Applicant: **SEIKO EPSON CORPORATION**
**4-1, Nishishinjuku 2-chome**
**Shinjuku-ku Tokyo-to(JP)**

(72) Inventor: **Wakai, Yoichi c/o Seiko Epson**
**Corporation**
**4-1, Nishishinjuku 2-chome Shinjuku-ku**
**Tokyo(JP)**
Inventor: **Baba, Hiroyuki c/o Seiko Epson**
**Corporation**
**4-1, Nishishinjuku 2-chome Shinjuku-ku**
**Tokyo(JP)**

(74) Representative: **Caro, William Egerton et al**
**J. MILLER & CO. Lincoln House 296-302 High**
**Holborn**
**London WC1V 7JH(GB)**

(54) Method of video display and video display device therefor.

(57) A video display comprises a liquid crystal display screen having 640 x 440 picture elements driven in vertical columns by a signal driving circuit DD and in horizontal lines by a scanning driving circuit SD. The display also includes an analog-to-digital converter 101, a line memory 102 for storing one line of video data, a field memory 103 for storing the lines of video data of one field, a multiplexer 106, a simultaneous dividing circuit 110 and a timing controller 111. An input complex video signal has a period Tv of video data which is divided into as many periods as there are picture elements (640) in a line of the matrix display 109 and digital signals representing the analog value of the video signal during the divided periods are derived from the converter 101. These signals are stored serially in the line memory 102 at a rate of 640/Tv. Half way through the video data time period Tv, the contents of the line memory start to be read out at the rate 1280/Tv double the writing rate, through the multiplexer 106 to the signal driving circuit 107. At the same time the contents are read into the field memory 103. Thus, the display receives the signals for one line during half the line time period Tv/2. However, during the previous field time period, odd or even, the field memory 103 was written in the same way. So, during the first half of the video data time period Tv, the contents of the field memory are read out to the matrix display signal driving circuit 107 at the faster rate 1280/Tv, so as to clear the field memory address before the half time of the video data time period Tv.

FIG. 1

## METHOD OF VIDEO DISPLAY AND VIDEO DISPLAY DEVICE THEREFOR

The present invention relates to methods of video display and video display devices therefor. The invention is particularly, but not exclusively, applicable where the display is formed of liquid crystal. The video signal is interfaced and divided into odd and even fields to be transferred.

At present, video display apparatus whose display is formed of liquid crystal usually have only a small sized liquid crystal display. When such a video display uses video signals, particularly video signals broadcast for television, the video signals of two scanning lines adjacent to each other in the field of video signals divided into odd and even fields, are displayed on the same line because the display is small. For a conventional liquid crystal television display, the number of scanning lines is about 220 to 240, and the degree of resolution in the longitudinal direction is about half of that of an ordinary television display. Because all the scanning lines are scanned by one field, the frequency for replacing data of display is 60Hz and the display hardly exhibits flicker, even if liquid crystal is used for the display.

However, in such a small sized liquid crystal video display, the image quality is not good, and the degree of resolution is inferior. Therefore, large sized liquid crystal video displays have been developed recently. The larger the display, the greater the number of picture elements, so that the number of scanning lines of a large sized liquid crystal display may be from 440 to 480, which is twice as many as those of the small sized liquid crystal displays.

When a video display having 440 to 480 scanning lines is driven by interfaced video signal method in the same manner as a normal television, the frequency for replacing data of display is 30Hz and the display exhibits a lot of flicker. Accordingly, the scanning lines of a frame are scanned by a non-interfaced driving method so that the scanning speed is twice as high, and the frequency for replacing data of display is 60Hz in order to avoid flicker. In the prior art non-interfaced driving method used, the video signals of one horizontal line time are displayed twice on two lines adjacent to each other using the line memory for storing video signals of one horizontal line time.

Because the same video data is displayed on two lines of display adjacent to each other, it is difficult to make the best use of the possibility of improving the degree of vertical resolution offered by the larger size of display.

The present invention seeks to overcome this problem and to provide a non-interfaced driving video display method capable of making the best use of the possibility of improving the degree of vertical resolution by using a line memory and a frame memory for storing video signals of one field, displaying video signals of both the previous field data and the present field data during the time of one field, and displaying different video signals over all the scanning lines of the display.

According to the invention there is provided a method of video display, in which the video signal is interlaced and divided into odd and even fields to be transferred, characterised in that the display comprises a line memory for storing the video data of one line, a field memory for storing the video data of one field, a signal driving circuit for generating signal driving signals in response to video data from the line memory or the field memory, and a scanning driving circuit for generating scanning driving signals for the display, and in that video data of one horizontal line time period is progressively written into the line memory during the one horizontal line time period, in that during the first part of the one horizontal line time period, the video data of the corresponding line time period of the preceding field which is stored in a predetermined part of the field memory before the one horizontal line time period, is transferred to the signal driving circuit, and in that during the second part of the one horizontal line time period, the video data stored in the line memory is transferred to the signal driving circuit.

Preferably, during the odd field, scanning driving signals are generated alternately in the order of the even line and the odd line, and during the even field, scanning driving signals are generated alternately in the order of the odd line and the even line.

During the second part of the one horizontal line time period, the video data of the one horizontal line time period may be transferred to the predetermined part of the field memory from the line memory.

Alternatively, during the horizontal line time, period, video data of the one horizontal line time period is written into the predetermined part of the field memory, and transference of video data stored in the predetermined part of the field memory to the signal driving circuit precedes the writing of video data into the predetermined part.

A method according to the invention may be characterised in that the video data portion of the video signal is divided into a plurality of blocks during a horizontal line time period, the line memory and/or the field memory is divided into a plurality of blocks corresponding to the plurality of video signal blocks, the individual blocks being connected in series when video data is written into the line memory and/or the field memory, whereby video data is written into the line memory and/or the field memory in series, and the video data in the blocks is read out in parallel.

In preferred embodiments, a method according to the invention is characterised in that the video signal complex and includes a simultaneous signal and a video signal in a time period Tc, the time period Tv of the included video signal being shorter than the time period Tc of the complex video signal, in that writing video data into the line or field memory during the time period Tv is performed at a rate of B per time period Tv, where B is the number of sections into which the video data is divided, in that reading video data of one time period Tv from line or field memory is performed at a rate of 2C per time period T c of the complex video signal, where C is a positive integer equal to or greater than B, and in that Tc/2C is greater than Tv/2B.

The invention seeks to provide a method of video display using a matrix display, from video signals designed to operate cathode ray tube television displays. In the latter, a frame is displayed by illuminating the odd lines of a screen followed by the even lines, so that the video signals are divided between odd and even fields which alternate. Within one frame time period, the odd field comprises a number of line time cycles equal to the number of odd lines, usually 263, whilst the even field comprises a number of line time cycles equal to the number of even lines, usually 262. Thus, in a single frame time period, there are 263 odd field lines of video data followed by 262 even field lines of video data. During each line time period Tc, there is a period Tv during which video data for the line is in th signal. The difference between the time periods Tc and Tv is used to allow for flyback signals and the transmission of non-displayed data. The illumination is of a serial character, whereas in a matrix display, parallel display of the picture elements of at least one line is important.

In the invention, the period Tv of video data is divided into as many periods as there are picture elements in a line of the matrix display (640) and digital signals representing the analog value of the video signal during the divided periods are derived by analog-to-digital conversion. These signals are stored serially in a line memory at a rate of B/Tv, where B is the number of picture elements in a line of the matrix display. Half way through the video data time period Tv, the contents of the line memory start to be read out at a rate, usually 2B/Tv, sufficiently fast to complete read out within the line time period Tc. At the same time, the contents are read into field memory and to a display signal driving circuit. Thus the display received the signals for one line during half the line time period. However, during the previous field time period, even or odd, the field memory was written into in the same way. So, during the first half of the video data time period Tv, the contents of the field memory are read out to the matrix display signal driving circuit at a faster rate, so as to clear the field memory address before the half way in the video data time period Tv.

Thus, the matrix display receives the signals for a line of the previous field, odd or even, during the first half of the line time period Tc, and the signals for another line of the present field, even or odd, during the second half of the line time period Tc. This enables the sequential illumination of lines of picture elements of a frame twice during the time period when the signals received would have illuminated the lines alternately once.

One further improvement is to split the field memory into two halves, as well as the line memory, the multiplexer and the matrix display signal driving circuit. If this is done, video data is read into the first block of line memory during the first half to Tv and into the second block during the second half. During the second half, data is read out in parallel from the two blocks of line memory into the two blocks of field memory at the single rate B/Tv, and through the two blocks of the multiplexer into the two blocks of signal driving circuit. During the first half of Tv, video data stored in the two blocks of field memory from the previous field are read out in parallel to the signal driving circuit.

Another improvement is to use the difference between the time periods Tc and Tv to start reading out of the field memory addresses at the fast rate, at the start of Tc which is earlier than Tv, so that the addresses are empty and ready to receive video data written into the line memory at the lower rate. Again, line memory data is read out during the second half at the faster rate, 2B/Tv.

This latter arrangement can be improved by splitting the line memory, field memory, multiplexer and signal driving circuit into two blocks each, so that parallel read-out is possible, reducing the rate again to B/Tv.

The invention uses the realisation that, in a sequence of frames of display, each individual line is not very different from the corresponding lines in the preceding and succeeding frames. In a television display, during the two fields of one frame, the lines of both fields are displayed. By the invention, during one field of a frame, the lines of that field and the lines of the preceding field are displayed, and, during the next field of the frame, the lines of that field and the lines of the preceding field are displayed. Thus, the full quota of lines is displayed twice during a single frame. Each line is repeated once, but no frame is repeated, because the lines of one field which were first displayed with the lines of the preceding field are repeated with the lines of the succeeding field.

Embodiments of the present invention are hereinafter described in detail with reference to the accompanying drawings, in which:-

Figure 1 is a block diagram of a first embodiment of video display device for carrying out the method according to the present invention;

Figure 2 is a block diagram of a line memory in the device of Figure 1;

Figure 3 is a block diagram of a signal driving circuit in the device of Figure 1;

Figure 4 is a block diagram of a display in the device of Figure 1;

Figure 5 is a block diagram of a scanning driving circuit in the device of Figure 1;

Figure 6 is a block diagram of a timing controller in the device of Figure 1;

Figure 7 is a timing chart of the operation of the device of Figure 1;

Figure 8 is a further timing chart of the operation of the device of Figure 1;

Figure 9 is a timing chart of the operation of the scanning driving circuit of Figure 5;

Figure 10 is a block diagram of a timing controller in a second embodiment of video display device for carrying out the method according to the invention;

Figure 11 is a timing chart of the operation of the device including the timing controller of Figure 10;

Figure 12 is a block diagram of a third embodiment of video display device for carrying out the method according to the present invention;

Figure 13 is a timing chart of the operation of the device of Figure 12;

Figure 14 is a block diagram of a fourth embodiment of video display device for carrying out the method according to the present invention;

Figure 15 is a timing chart of the operation of the device of Figure 14;

Figure 16 is a further timing chart of the operation of the device of Figure 14;

Figure 17 is a timing chart of the operation of a fifth embodiment of video display device for carrying out the method according to the present invention;

Figure 18 is a block diagram of a sixth embodiment of video display device for carrying out the method according to the present invention; and

Figure 19 is a timing chart of the operation of the device of Figure 18.

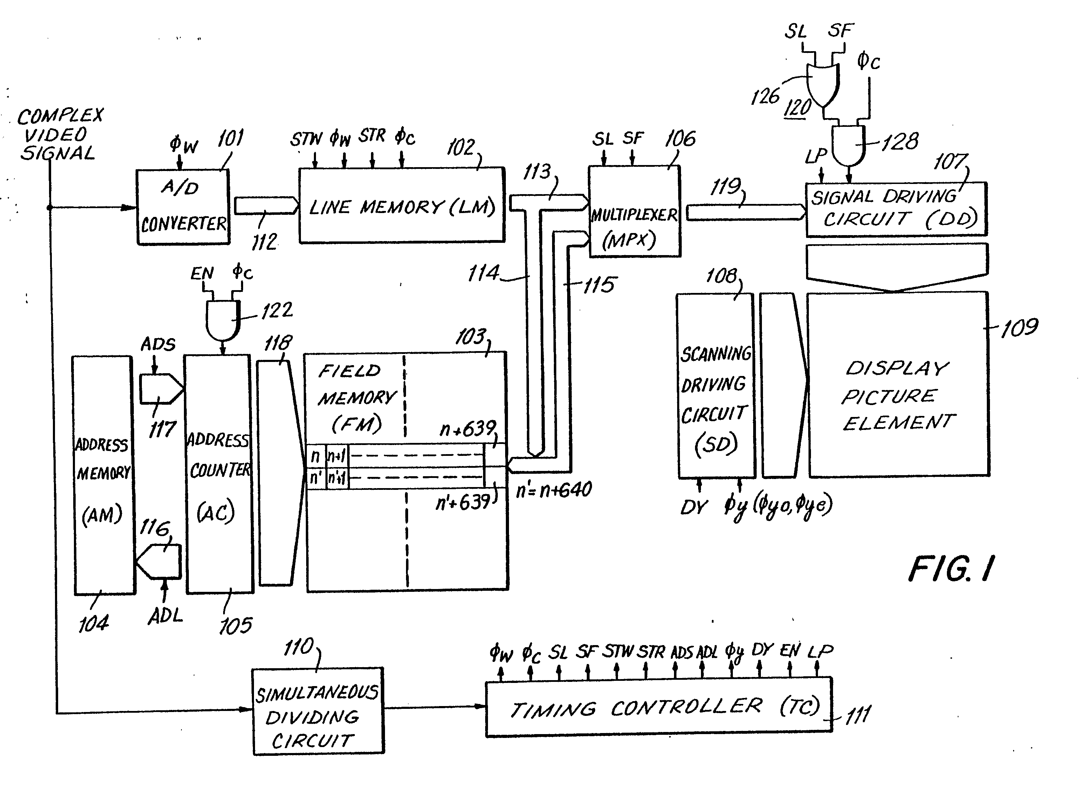

In a first embodiment of video display device (Figure 1) for carrying out the method of video display according to the present invention, an analog-to-digital converter 101 transduces the video signal of a complex video signal by clock signals $\emptyset$w into digital signals. The complex video signal includes a simultaneous signal and the video signal to be displayed. The video signal to be displayed is divided into a plurality of sections, each corresponding to a picture element of a line of the display. Each section of the video signal is then divided into a plurality of graduations to derive a digital signal representative of its analog value. When the video signal is divided into sixteen graduations, digitised 4-bit video data is output from the converter 101, and transferred to a line memory 102 over data bus 112.

Line memory (hereinafter referred to as LM) 102 is a FIFO (first-in, first-out) memory for storing video data of one horizontal line time period or term (1 H). A start writing signal STW initiates writing into LM 102 of videa data of 1 H according to the change of the writing address of memory due to clock signal $\emptyset$w. A start reading signal STR initiates reading from LM 102 of video data of 1 H according to the change of reading out address of memory due to a clock signal $\emptyset$c. Video data read out of LM 102 is transferred to a multiplexer (hereinafter referred to as MPX) 106 and to a field memory (hereinafter referred to as FM) 103 over data buses 113 and 114, respectively.

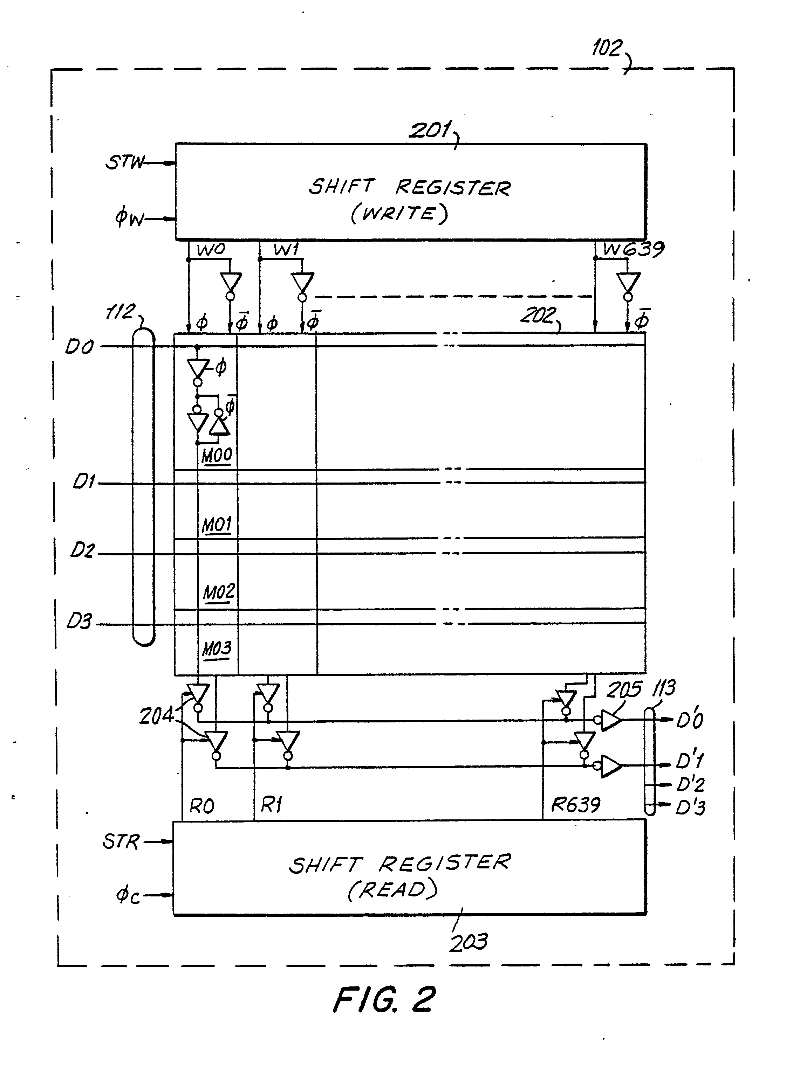

LM 102 (Fig.2) includes a shift register 201 for designating a writing address, which register is started by the start writing signal STW and is shifted by clock signals $\emptyset$w. Sequentially, the outputs W0, W1, etc. of each column of the shift register 201 progressively become "1". A storage circuit portion 202 of LM 102 stores 640 words each of 4 bits when the video data has 4 bits D0 to D3. Each word has latched the 4 bits M00 to M03. Because the outputs W0, W1... are connected to the latch clock, bits D0, D1, D2 and D3 are written in M00, M01, M02 and M03, respectively, as the outputs W0, W1, etc. become "1". Thus, video data is progressively written in the first, second and following words. A shift register 203 designates the address to be read out. The shift register 203 is initiated by the start reading signal STR, and is shifted by clock signals $\emptyset$. Thus, outputs R0, R1 etc. from each column of the shift register 203 progressively become "1". Commonly connected clocked gates 204 are thus opened from the stored bits M0 to M3 to the data bus 113. Each word stored in the storage circuit portion 202 is read out in order of the word written and the words as video data $D'0$ to $D'3$ are output in parallel to the data bus 113.

FM 103 (Fig.1) has a storage capacity of one field of video signals of 1 H. Video data is stored in addresses between $\underline{n}$ and $(\underline{n} + 639)$, in the case of this embodiment where the number of video elements in a line display 109 which exist in the horizontal direction is 640. The video signal of 1 H is regarded as the video signal whose time period Tv is divided so that B is 640, where B is the same as referred to above. The video data of the following time period or term H is stored in addresses between $n'$ and $(n' + 639)$, where $n'$ is equivalent to $n + 640$. Video data is fed to FM 103 over data buses 114 and 115. When the video data is written into FM 103, the video data of 1 H is transferred from LM 102 to FM 103 over data bus 114.

Address counter (hereinafter referred to as AC) 105 provides an address for reading from or writing in FM 103. A signal EN controls the release of addresses in AC 105. When the signal EN is "1", a clock signal Øc can pass to AC 105 and increment the counter code. The code of AC 105 is transferred to FM 103 over address bus 118, thereby designating a predetermined address.

Address memory (hereinafter referred to as AM) 104 temporarily stores the code in AC 105. The address code of AC 105 is latched by a signal ADL over address bus 116. The address code stored in AM 104 is sent by a signal ADS to AC 105 over address bus 117.

MPX 106 selectively controls whether the video signal output from LM 102 or that from FM 103 is transferred to a signal driving circuit (hereinafter referred to as DD) 107. When a control signal SL is "1", the video signal output from LM 102 is selected. When a control signal SF is "1", the video signal output from SF 103 is selected.

The video signal from MPX 106 is transferred to the signal driving circuit DD 107 over data bus 119.

DD 107 generates signal driving signals for the column direction of the display 109 depending on the video signals. Because the display 109 has 640 picture elements in the line or horizontal direction, the number of output terminals from DD 107 is 640.

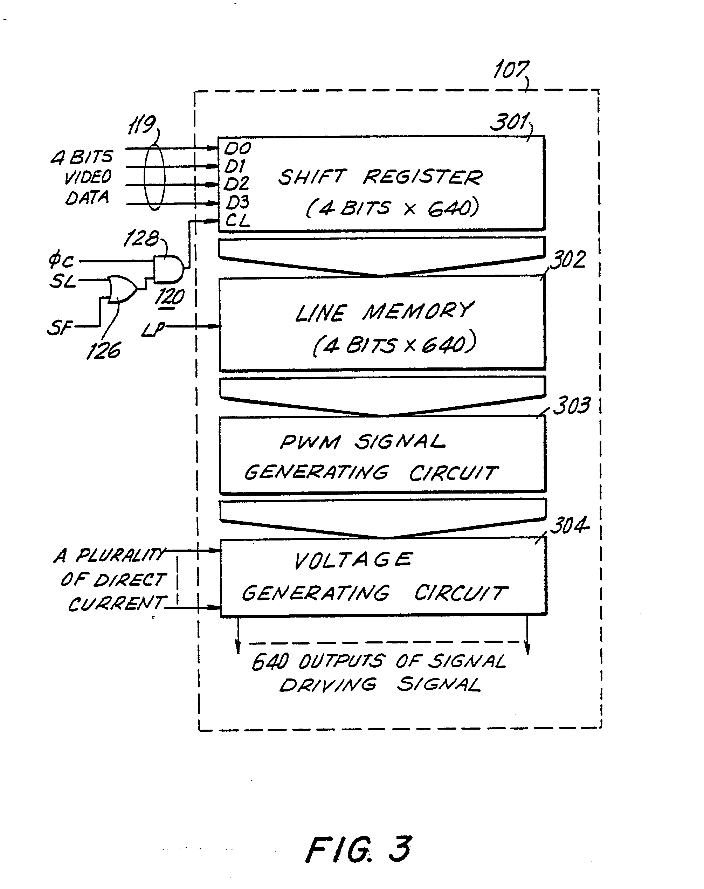

DD 107 (Fig.3) includes a shift register 301 having a capacity of 4 bits x 640 columns on the assumption that the video data has 4 bits. The shift data of shift register 301 is video data having 4 bits input over data bus 119. A gate network 120, ensures that, when the control signal SL or SF is "1", clock signal Øc is input as shift clock into the shift register 301, and video data D0 to D3 input over bus 119 is transferred into the shift register 301. DD 107 also includes a line memory 302 having a capacity of 640 4 bit words, and each word is connected to the corresponding column of shift register 301. Video data stored in shift register 301 is transferred to the line memory 302 by signals LP so that the video data is refreshed by the signals LP. PWM signal generating circuit 303 generates PWM signals depending on the weight or graduation of video data of each word from line memory 302, the video signals having 4 bits. Voltage generating circuit 304 outputs 640 driving signals by selecting the particular voltage from a plurality of direct voltages input according to the PWM signals.

DD 107 converts the video signals input in series to parallel output signal driving signals along a line. Such a circuit is a monolithic integrated circuit, for example the CMOSIC "MSM5300" manufactured by Oki Electric Industry Co., Ltd. manufactured for liquid crystal display.

A scanning driving circuit (hereinafter referred to as SD) 108 (Fig.1) generates scanning driving signals in the column or vertical direction.

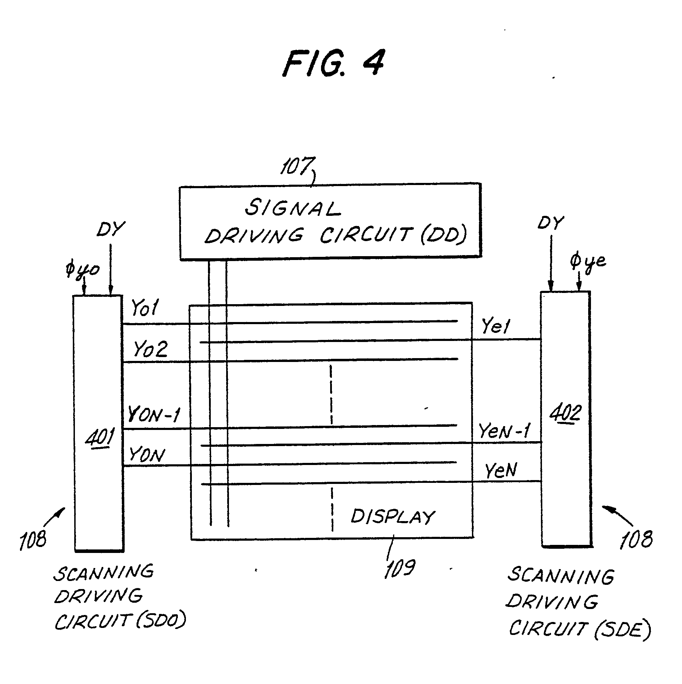

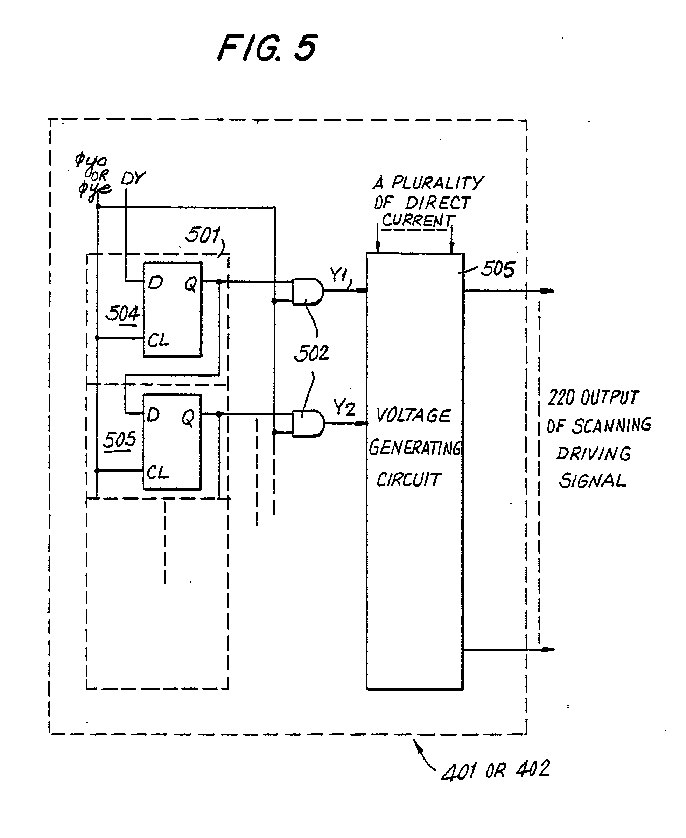

SD 108 (Fig.4) is divided into a scanning driving circuit (hereinafter referred to as SDO) 402 for driving the odd lines and a scanning driving circuit (hereinafter referred to as SDE) 402 for driving even lines. Each of SDO 401 and SDE 402 (Fig.5) includes a shift register 501 having 220 lines. Each line of shift register 501 is formed of a flip-flop 503, 504, etc., and each output Q of a line flip-flop is connected to the input D of a following flip-flop. Shift data DY is shifted by shift clock signal Øyo or Øye through the shift register 501. Each line has an AND gate 502 which receives the output Q of its line and the shift clock signal Øyo or Øye and gives a logical output to a voltage generating circuit 505 which selects the particular voltage from a plurality of input direct voltages according to the logic of "1" or "0" and outputs 220 scanning driving signals. Because each circuit 505 outputs 220 scanning driving signals, 440 lines can be driven. This circuit is also made as a monolithic integrated circuit, for example, C-MOSIC "MSM5298" manufactured by Oki Electric Industry Co., Ltd. used for liquid crystal display. The display 109 is formed of liquid crystals and has 640 picture elements in the horizontal direction and 440 picture elements in the vertical direction.

The complex video signal is also fed to a simultaneous dividing circuit 110 which divides the simultaneous signal from the video signals by amplitude dividing technique. From these a timing controller (hereinafter referred to as TC) 111 forms the various controlling signals Øw, Øc, SL, SF, STW, STR, ADS, ADL, Øy, DY, EN and LP.

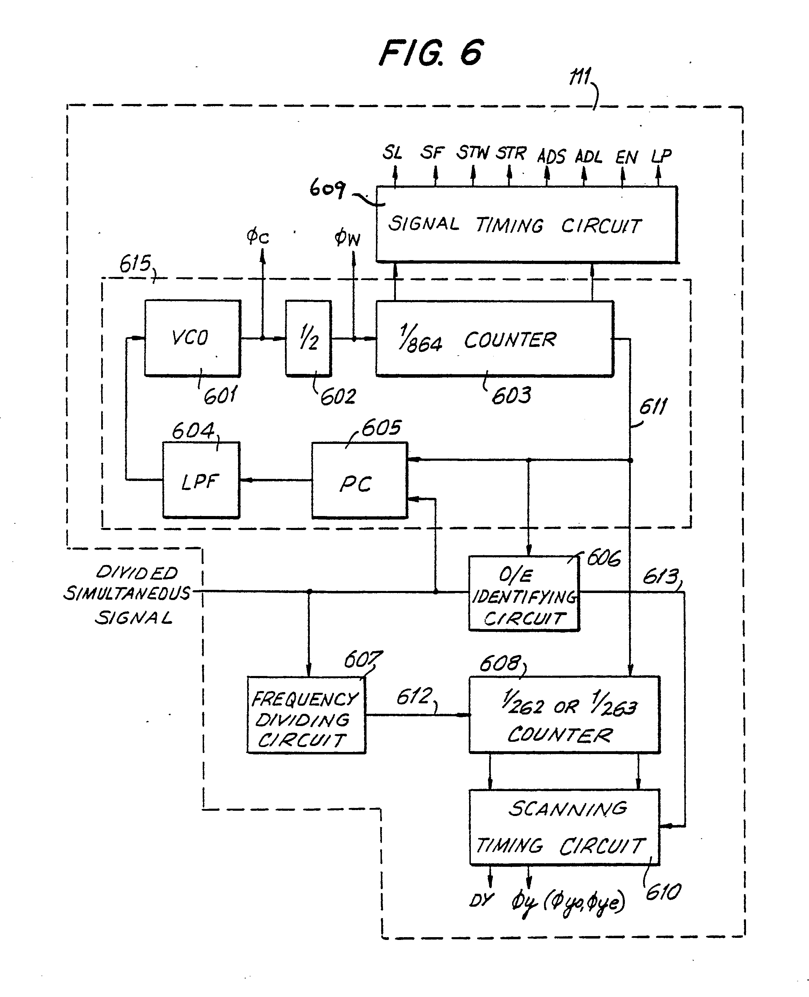

TC 111 (Fig.6) includes a voltage controlled oscillator (hereinafter referred to as VCO) 601, the oscillating frequency changing due to the direct phase comparative voltage output from a low pulse filter (hereinafter referred to as LPF) 604. When the PLL is in a stable state as described hereinafter, the oscillating frequency fvco of VCO 601 is represented as:

$$fvco = 2 \times 864 \times fH$$
$$= 2 \times 864 \times 15734 \text{ Hz}$$

~ 27.2 MHz

wherein fH stands for horizontal simultaneous frequency. The video data of 1 H corresponds to 640 picture elements, fvco in the term of 1 H corresponds to 864 picture elements. Clock signal $\emptyset c$ is output from VCO 601 and is divided by half by a counter 602, whose output is clock signal $\emptyset w$ which is input in turn to a 1/864 counter 603. The clock signals $\emptyset w$ are divided by 864 in the 1/864 counter, whose output on line 611 is at a frequency fH equivalent to 15734 Hz when PLL is in a stable state (in the case of television service of NTSC.M system). A phase comparator (hereinafter referred to as PC) 605 compares the input horizontal simultaneous signal with signals on line 611 with respect to phase, generating phase comparative signsls supplied to LPF 604. LPF 604 integrates the phase comparative signals from PC 605, thereby forming a direct voltage for controlling the oscillating frequency of VCO 601. PLL comprises VCO 601, counters 602 and 603, PC 605 and LPF 604. A signal timing circuit 609 decodes the count in counter 603 and forms the control signals SL, SF, STW, STR, ADS, ADL, EN and LP in the horizontal direction.

The complex simultaneous signal is also input into O/E identifying circuit 606 which receives signals on line 611 to identify the odd and even fields, and into frequency dividing circuit 607 which divides only the vertical simultaneous signals and supplies them over line 612 to a counter 608 which divides signals on line 611 by 262 or by 263. Counter 608 is reset by vertical simultaneous signals on line 612, thereby counting signals on line 611. When PLL is in a stable state, the frequency of signals on line 611 is fH, and therefore, counter 608 counts the number of the horizontal terms. The division rate is switched alternately between 262 and 263 every field, so that the counter 608 counts 525 H in two fields. A scanning timing circuit 610 decodes the count in counter 608 and an O/E identifying signal on line 613 from the O/E identifying circuit 606, thereby forming control signals DY, $\emptyset yo$ and $\emptyset ye$ for the scanning display 109.

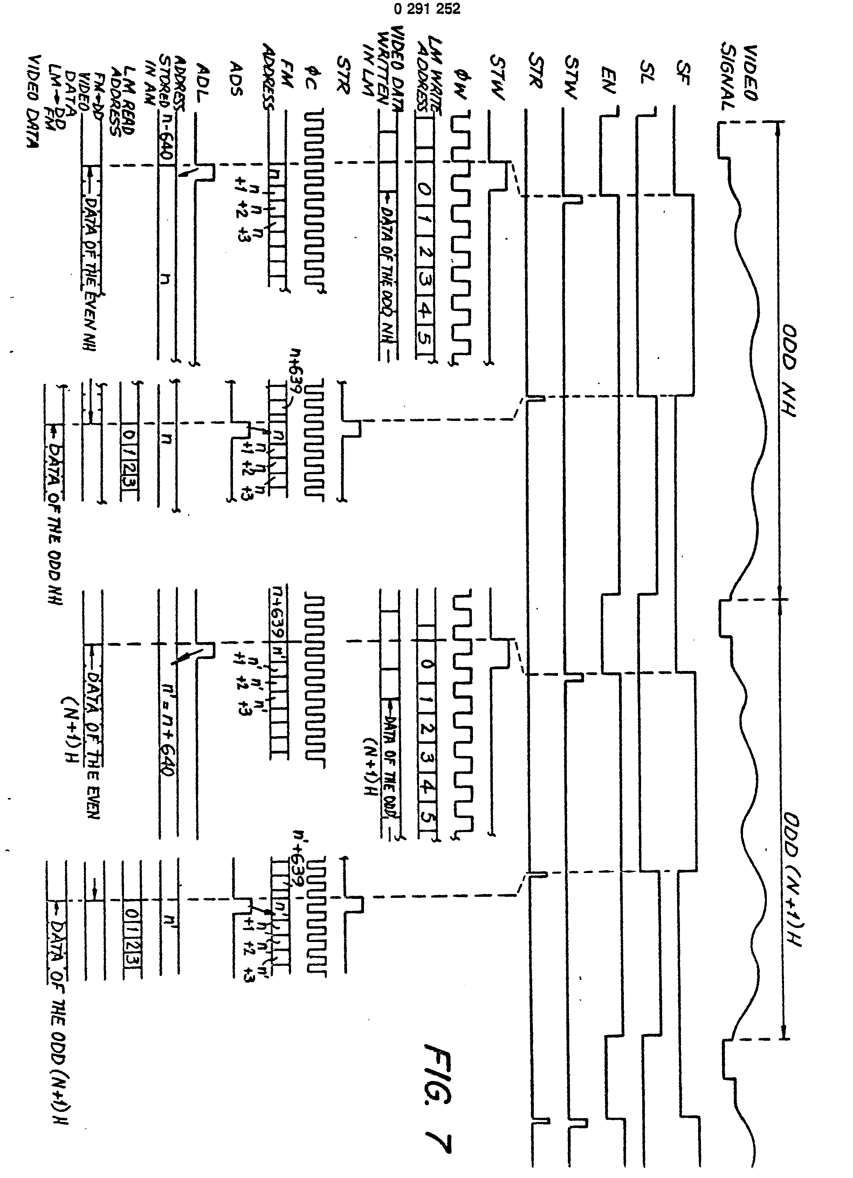

Fig. 7 is a timing chart of the operations during time periods or terms NH and (N + 1)H of the odd field. Signals SF and SL become "1" in the first half and in the second half of horizontal term, respectively. MPX 106 selects the video data read out of FM 103 when signal SF is "1" and selects the video data read out of LM 102 when signal SL is "1", thereby transferring the individual video data to DD 107.

Signal EN is '1" whenever signal SF or SL is "1". When signal EN is "1", clock signal $\emptyset c$ is supplied to AC 105.

Signal STW occurs when signal SF rises and has a period twice that of clock signal $\emptyset w$. Signal STR occurs when signal SL rises and has a period twice that of clock signal $\emptyset c$.

During the odd NH, shift register 201 starts to write data in LM 102 when signal STW rises to "1", and the write address in LM 102 is changed simultaneously with the clock signal $\emptyset w$. At the same time, the video signals of the odd NH are progressively written in LM 102.

Furthermore, because signal EN is "1", the address of FM 103 in AC 105 is incremented by integers (n, n + 1, etc) progressively and simultaneously with clock signal $\emptyset c$. Signal ADL occurs as signal EN rises, and the address "n" from AC 105 of FM 103 is set in AM 104. In correspondence with the change of the address of FM 103 due to address signals from AC 105, the video data of even NH written in between the address n and the address n + 639 of FM 103 is transferred to DD 107 when signal SF is "1".

During the second half of odd NH, shift register 203 starts to read out data in LM 102 due to the signal STR becoming "1", and the address read out of FM 103 changes simultaneoulsly with clock signals $\emptyset c$.

In FM 103, the signal ADS rises, when the signal SL rises, and the address "n" stored in AM 104 is sent to AC 105. Simultaneously with the clock signals $\emptyset c$, AC 105 changes the address of FM 103 to n, n + 1, progressively until n + 639.

Because the signal SL is "1", the video data of odd NH read out of LM 102 is transferred to DD 107, and at the same time, progressively written into the addresses n, n + 1, etc. of FM 103 over data bus 114. The frequency of clock signal $\emptyset c$ is twice that of clock signal $\emptyset w$, and clock signal $\emptyset w$ precedes clock signal $\emptyset c$, so that writing data is absolutely ahead of reading data.

During the first half of the horizontal term of the odd (N + 1)H, namely when signal SF is "1", the video data of the even (N + 1)H written in the addresses $n'$ to $n'$ + 639 of FM 103, where $n'$ is equivalent to n + 640, is transferred to DD 107. At the same time, the video data of the odd (N + 1)H is written in LM 102.

Because signal of SL is "1" during the second half of the off (N + 1)H, the video data of the odd (N + 1)H in the 640 addresses of LM 102 is transferred to DD 107, and written in the addresses $n'$ to $n'$ + 639 of FM 103.

Operation of the apparatus during the even fields is similar to that in the odd fields of Fig. 7.

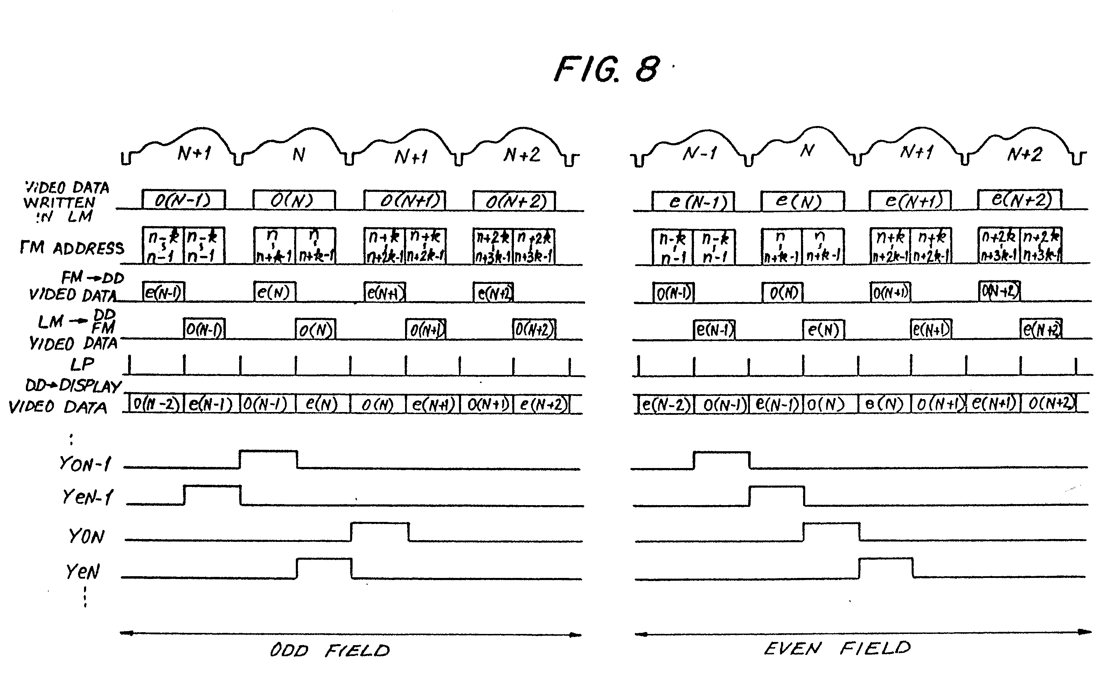

In Fig. 8, k is 640. In the NH of the odd field, the video data of the odd NH is written in LM 102 during a time period of 1 H. The individual addresses n to n + k - 1(or n + 639) of FM 103 are repeated twice in the first and second halves of the horizontal time period or term. The video data of the even NH in FM 103 is transferred to DD 107 during the first half of NH, and the video data of the odd NH in LM 102 is transferred to DD 107 and to FM 103 in the second half.

The video data transferred to DD 107 is first introduced into the shift register 301 (Fig.3) and then introduced into the line memory 302 due to signals LP. Therefore, the output of signal driving signals due to each video data of the even NH and the odd NH is about half a time period or term late for the transfer of each video data to DD 107.

Further, in the odd field, because the scanning driving signals are generated in the order of $Ye_N$-1, $Yo_N$-1, $Ye_N$ and $Yo_N$, display 109 can display the correct image by delaying the video data of the even field so as to occur after the video data of the odd field which is otherwise later.

In the even field, the scanning driving signals are generated in the order of $Yo_N$-1, $Ye_N$-1, $Yo_N$ and $Ye_N$ so that the liquid crystal display 109 can display the correct image by compensating the video data of the even field with the video data of the odd field ahead.

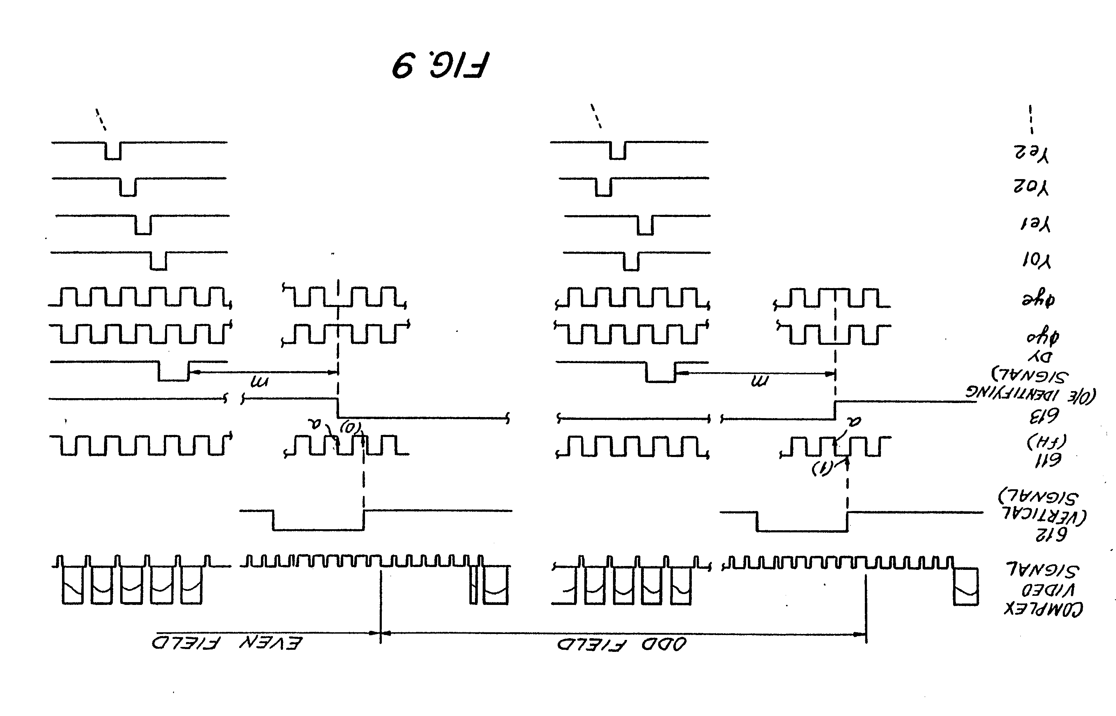

A vertical signal (Fig.9) is formed on line 612 by dividing the frequency in frequency dividing circuit 607 (Fig.6). The frequency $f_H$ of the signal from counter 603 on line 611 is equivalent to 15734 Hz when the PLL is in a stable state. The signal on line 611 is simultaneously formed with the complex video signal, and the duty thereof is 50%. The odd/even field identifying signal on line 613 is derived from circuit 606 (Fig.6). In this case, the kind of field is defined by the level of signal on line 613 when the vertical signal rises. If the level of signal on line 613 is "1", an odd field is identified. When the level of signal on line 611 is "0", an even field is identified.

The starting signal DY from circuit 610 to the shift register 501 in SD 108 is generated until m signals on the line 611 are counted after the first rising of the signal on line 611 generated after the rising of the vertical signal on line 612. Shift clock signal Øyo has an inverse phase to shift clock signal Øye. When the signal on line 613 is 1", the signal Øyo has the opposite phase to that of the signal on line 611 and the signal Øye has the same phase as that on line 611. When the signal on line 613 is "0", the signal Øyo has the same phase as that on line 611 and the signal Øye has the opposite phase to that on line 611.

When the signal DY is transferred with the signals Øyo and Øye to the shift register 501, in the odd field, the scanning driving signal Ye1, Ye2 of the even lines precedes that Yo1, Yo2 of the odd lines, and in the even field, the scanning driving signal Yo1, Yo2 of the odd lines precedes that Ye1, Ye2 of the even lines.

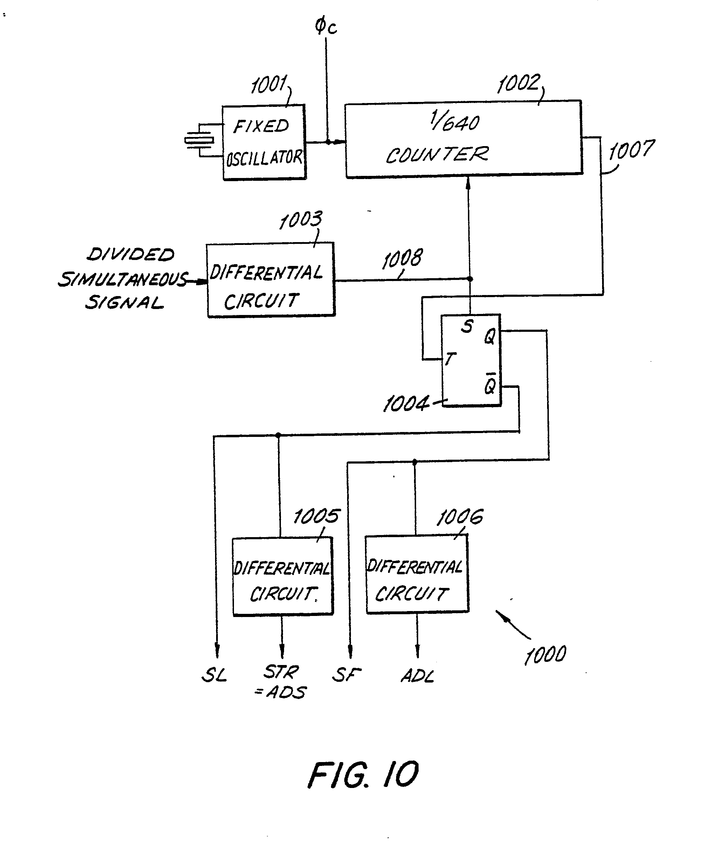

The second embodiment of video display device which carries out the method of video display according to the present invention is similar to that of the first embodiment of Fig.1, except for the fact that signals Øc,SL,SF,STR, ADS,ADL and LP for reading out video data from LM 102 and FM 103 are formed by a different timing controller, which is shown diagrammatically in Fig.10. The signals for writing are generated from a timing controller similar to the controller 111 in Fig.1. A fixed oscillator 1001 consisting of crystal oscillators or the like, has an oscillating frequency fx defined as follows. If one time period of the complex video signals is Tc, fx = 2C/Tc, where C is the number of picture elements of the display in the horizontal direction.

Thus, where Tc = $1/f_H$ = 1/15734 ~ 63.6 µs, and C is 640, the oscillating frequency fx ~20.1-(MHz).

The clock signals Øc are output from oscillator 1001 at the oscillating frequency fx. A 1/640 counter 1002 counts clock signals c 640 times and outputs signals on line 1007.

The simultaneous dividing signals are input to a differential circuit 1003 which generates a differential pulse on line 1008 at the end of a horizontal simultaneous signal. The counter 1002 is started by the differential pulse on line 1008, which also sets a toggle flip-flop 1004.

The toggle flip-flop 1004 receives signals on line 1007 and provides alternate outputs on Q and $\overline{Q}$. The output from Q is used as signal SF and the output from $\overline{Q}$ is used as signal SL. Further, the signal from $\overline{Q}$ is recognised at the start of signal SL by differential circuit 1005 which outputs a pulse signal STR used also as the signal ADS.

The signal from Q is recognised at the start of signal SF by a differential circuit 1006 which outputs a pulse signal ADL. EN is absolutely "1".

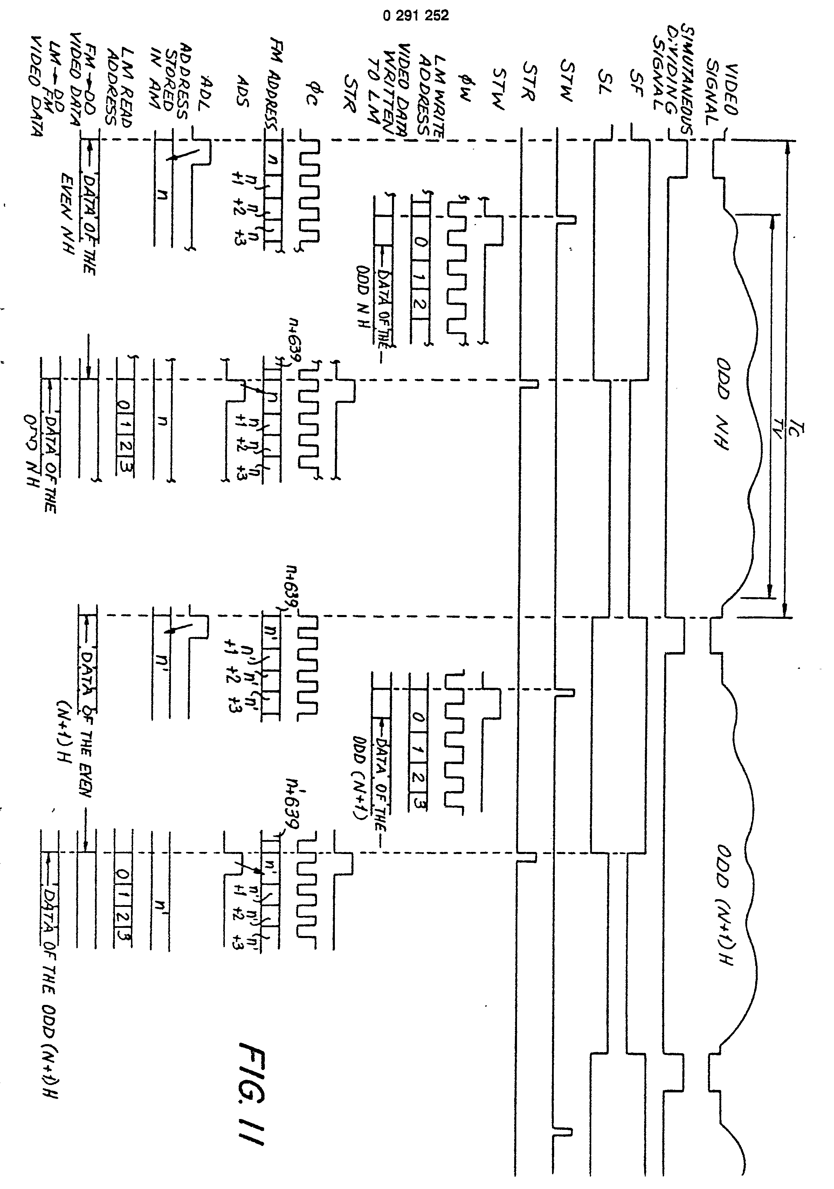

Fig. 11 is a timing chart illustrating the operation of the device by the individual signals derived from the timing controller of Fig. 10.

In the timing chart (Fig.11) of the NH and the (N + 1 ) H of the odd field, signals SF and SL become "1" at the start of the first half and at the start of the second half, respectively. In MPX 106, video data is read out from FM 103 when SF is "1", and video data is read out from LM 102 when SL is "1", the video data being transferred to DD 107.

Because signal EN is always "1", clock signals Øc are always supplied to AC 105.

The signal STW occurs at the start of the video data portion of the horizontal line time period, that is the time period Tv. Thereafter clock signals Øw write video data into LM 102 under the control of shift register 201.

The signal STR occurs half way through time period Tv and starts reading of video data out of LM 102 into FM 103.

Signal SF becomes "1" simultaneously with the rising of the simultaneous dividing signal, and video data from FM 103 is selected by MPX 106. The addresses of FM 103 indicated by AC 105 are incremented by clock signals Øc, and the video data of the even NH which is stored in the addresses n to (n + 639) is read out. Because signal ADL is generated at the start of SF, the address "n" shown by AC 105 is set in AM 104.

When clock signal Øc has been counted 640 times (after Tc/2 from the simultaneous dividing signal rising), SF drops to "0" and SL rises to "1". Then the video data of the odd NH is read out of LM 102 by clock signals Øc and transferred to DD 107. Further, because signal ADS is generated at the start of SL being "1", the address "n" of AM 105 is set to AC 105. Therefore the video data of the odd NH is transferred from LM 102 over data bus 114 and written in the addresses n to n + 639 of FM 103.

In the same manner, for the odd (N + 1)H, the video data of the even (N + 1)H which is stored in the addresses $n'$ and $n' + 639$, $(n' = n + 640)$ of FM 103 is transferred to DD 107 during the first half of one horizontal line time period, and the video data of the odd (N + 1)H is transferred to DD 107 and to the addresses $n'$ to $n' + 639$ of FM 103 timed by clock signals Øc.

In this case, because the frequency of clock signals Øc is about 20.1 MHz as mentioned above, it is lower than that of the clock signals Øc in the first embodiment (about 27.2 MHz). Therefore, the total electric power consumption of the system can be reduced, and timing margins of circuit design can be enlarged, because this embodiment is improved in access time for reducing out and in writing data and timing for transforming the video data.

Because the whole time period Tc is available for reading out from the field memory, and because there are 2B bytes of information to be transferred to the display signal driving circuit, the lowest possible frequency for read out is 2B/Tc, which, because Tc is greater than Tv, is less than double the line data reading frequency of B/Tv.

In this embodiment, where the rate of read out from the field memory is 2C per time period, C is equivalent to B, where B is the number of picture elements which exist in the horizontal line direction of display 109. If C is greater than B, then as long as 2C/Tc<2B/Tv, the video data can be read out from the video memory at a low frequency.

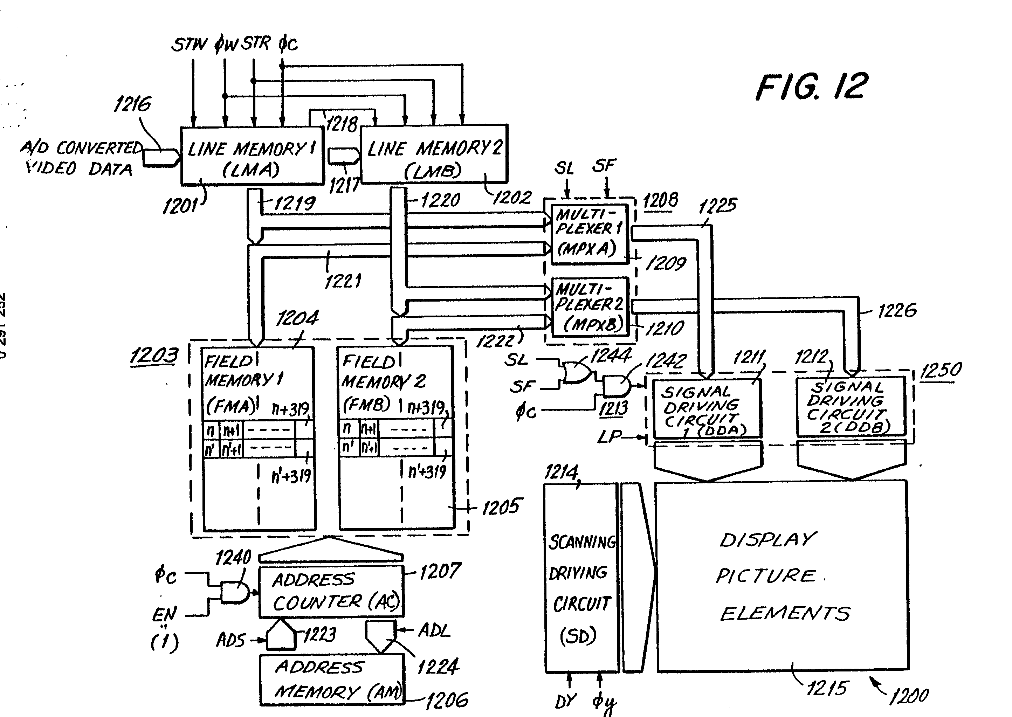

In a third embodiment of video display apparatus (Fig.12) for carrying out the method of video display according to the present invention, digital video data from an analog-to-digital converter (not shown) is input over a data bus 1216 to a first line memory LMA 1201, and over a data bus 1217 from LMA 1201 to a second line memory LMB 1202.

If the video data has 4 bits, each line memory is 4 bits wide and 320 bits long. LMA 1201 stores the first half of video data and LMB 1202 stores the second half of video data. The structures of LMA 1201 and LMB 1202 are similar to that of line memory LM 102 shown in Fig.2. From a timing controller (not shown) a signal STW starts the writing of video data serially into LMA 1201, and clock signals Øw act to shift data through the internal shift register progressively. The timing controller is similar to the timing controller TC 111 shown in Fig.6, except that the frequency of clock signals Øw is the same as that of clock signals Øc. The output of the last column of the shift register in LMA 1201 is taken over line 1218 to start writing in LMB 1202, the clock signals Øw acting to shift the internal shift register of LMB 1202. Thus, when a signal appears on line 1218, the video data is serially written into LMB 1202. The line memories LMA 1201 and LMB 1202 store the video data of 1 H. A signal STR starts the read out from LMA 1201 and LMB 1202. When the signal STR is generated, the video data is independently read out from each line memory by clock signals Øc. The video data of the first half of 1 H which is read out from LMA 1201 is transferred to multiplexer 1208 and to frame memory 1203 over data bus 1219. The video data of the second half of 1 H which is read out from LMB 1202 is transferred to multiplexer 1208 and to field memory 1203 over data bus 1220.

Field memory 1203 contains a first field memory FMA 1204 and a second field memory 1205, each for storing the video data of half a field. The video data of 1 H is stored in the address n to n + 319 of FMA 1204 and in the address n to n + 319 of FMB. The video data from LMA 1201 is input to FMA 1204 over data bus 1219. The video data from FMA 1204 is output to multiplexer 1208 over data bus 1221. The video data from LMB 1202 is input to FMB 1205 over data bus 1220. The video data from FMB 1205 is output to multipleplexer 1208 over data bus 1222.

An address counter AC 1207 designates an address for the frame memory 1203, both FMA 1204 and FMB 1205 using the same address. When a signal EN is "1", clock signals Øc are passed to AC 1207 to increment the contents thereof.

An address memory AM 1206 receives the contents of AC 1207 over address bus 1224 when signal ADL occurs. The contents of AM 1206 are set in AC 1207 over address bus 1223 by signal ADS.

The multiplexer 1208 includes a first multiplexer MPXA 1209 and a second multiplexer MPXB 1210. MPXA 1209 is connected by data buses 1219 and 1221 to LMA 1201 and FMA 1204.

MPXB 1210 is connected by data buses 1220 and 1222 to LMB 1202 and FMB 1205. When signal SL is "1", the video data of LMA 1201 and LMB 1202 are transferred by multiplexer 1208 to signal driving circuit 1210 over data buses 1225 and 1226. When signal SF is "1", the video data of FMA 1204 and FMB 1205 are transferred by multiplexer 1208 to signal driving circuit 1210 over data buses 1225 and 1226.

The signal driving circuit 1210 includes a first signal driving circuit DDA 1211 and a second signal driving circuit DDB 1212. The internal structures of DDA 1211 and DDB 1212 are similar to those of the signal driving circuit 107 shown in Fig. 3. In particular, a gate network 1213 supplies clock signals $\emptyset$c whenever signal SL or signal SF is "1". However, the size of the shift register and the line memory in each is 4 bits x 320 columns. The video data from MPXA 1209 and MPXB 1210 are input into DDA 1211 and DDB 1212, respectively, over data buses 1225 and 1226 respectively, 320 outputs of signal driving signals from each of DDA 1211 and DDB 1212 are generated depending on the video signal data and passed to display 1215.

The display 1215 is a liquid crystal display comprising 640 picture elements in a horizontal direction and 440 in a vertical direction. A scanning driving circuit SD 1214 generates the scanning driving signals to the display 1215 and its internal structure is similar to that of circuit 108 shown in Figs. 4 and 5.

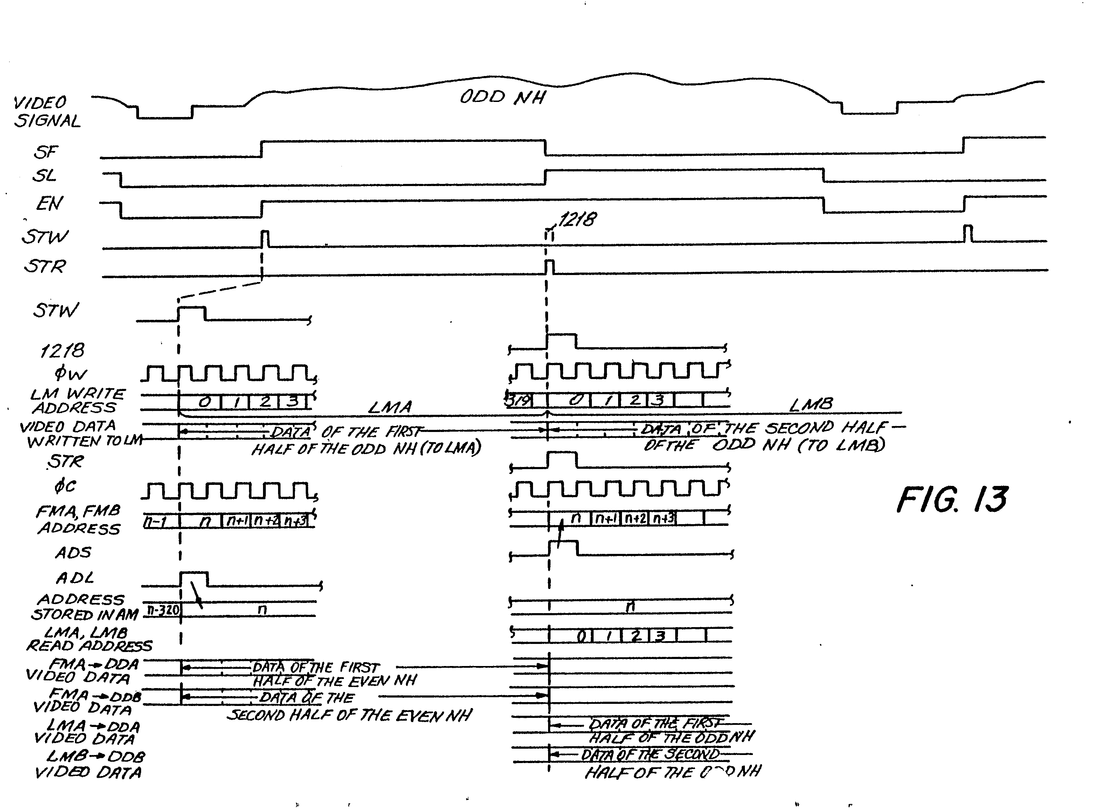

Fig.13 is a timing chart of the time period or term NH of the odd field. Signal SF rises to "1" at the start of the first half and the signal SL to "1" at the start of the second half of the horizontal term. When SF is "1", the video data in FMA 1204 and FMB 1205 are transferred through MPX 1208 to DDA 1211 and DDB 1212, respectively. When SL is "1", the video data in LMA 1201 and LMB 1202 are transferred through MPX 1208 to DDA 1211 and DDB 1212, respectively.

When signal EN is "1", clock signals $\emptyset$c are supplied to AC 1207.

Signal STW is generated when SF rises, and is input into LMA 1201. The signal on line 1218 for starting writing data to LMB 1202 is generated from the last column of shift register in LMA 1201. The generation of the signal on line 1218 is simultaneous with the rising of the signal SL. The write address of LMA 1201 is changed simultaneously with clock signal $\emptyset$w by signal STW, and consequently, the video data of the first half of the odd NH is written.

The contents of the counter, in AC 1207, giving the address of frame memory 1203 is changed by clock signal $\emptyset$c from n to n +1, and so on. Because the frequency of clock signals $\emptyset$c is the same as that of clock signals $\emptyset$w, 320 addresses,

from n to n + 319, are accessed before the fall of signal SF. As the address is changed, the video data of the first half of the even NH, which is stored in the addresses n to n + 319 of FMA 1204 is transferred to DDA 1211. The video data of the second half of the even NH stored in the address n to n + 319 of FMB 1205 is transferred to DDB 1212. At the same time, the contents of AC 1207 "n" is set in AM 1206 by signal ADL.

When signal SF and signal SL are "0" and "1", respectively, writing of LMB 1202 is started by the signal on line 1218 generated from LMA 1201. Then the video data of the second half of the odd NH is gradually written into LMB 1202. The contents of AM 1206 "n" is set in AC 1207 again by signal ADS, and the addresses n to n + 319 of frame memory 1203 are accessed. Reading of LMA 1201 and LMB 1202 is started by signal STR, and occurs simultaneously with clock signal $\emptyset$c at the same frequency as clock signal $\emptyset$w. Then the video data of the first half of the odd NH stored in LMA 1201 is transferred to the addresses n to n + 319 of FMA 1204, and to DDA 1211. The video data of the second half of the odd NH written in LMB 1202 is transferred to the addresses n to n + 319 of FMB 1205, and to DDB 1212.

From the video data transferred to DDA 1211 and DDB 1212, signal driving circuit 1210 generates the signal driving signal. In the odd field, SD 1214 generates the scanning signals in the order of the even and odd lines, while in the even field, SD 1214 generates the scanning signals in the order of the odd and the even lines.

In this case, the line memory and the frame memory are formed of two blocks, respectively, corresponding to the first half and the second half of the video signal of 1 H. Therefore, clock signals $\emptyset$c for reading out the video data from each video memory have the same frequency as clock signals $\emptyset$w, and the oscillating frequency is represented as fvco/2 ~13.6 MHZ. Thus the value of fvco/2 can be set as in the first example. Therefore, the consumption power of the system can be reduced, and the timing margin in the circuit design advantageously increases.

In this embodiment, the video display is divided into two parts. Based on the same concept, the video memory may be divided into more than two parts. As disclosed in the second embodiment, the video data may be read out from the video memory in the whole horizontal term, namely the whole Tc, thereby reducing the frequency of reading out the video data.

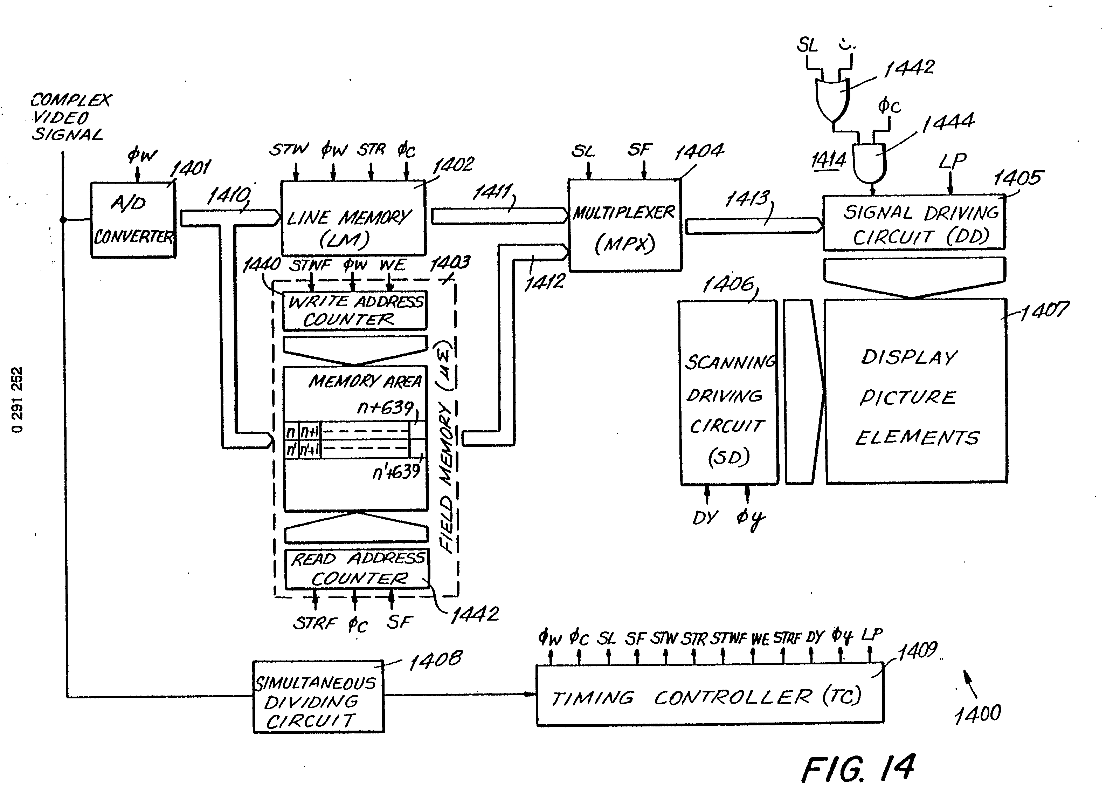

In a fourth embodiment of video display apparatus (Fig.14) for carrying out the method of video display according to the present invention, the video signal of the complex video signal is converted in an analog-to-digital converter 1401 by clock signals Øw from analog to digital. When the video signal is cut into 16 graduations, the converter 1401 outputs digital video data of 4 bits. Ditigal video data is transferred to a line memory LM 1402 and field memory FM 1403 over data bus 1410.

LM 1402 is the memory for storing the video data of 1 H of one horizontal term, and it is of similar construction to the line memory LM 102 shown in Fig.2. A signal STW starts the writing of data into LM 1402, the write address being changed by clock signals Øw, so that the videc data of 1 H is written. A signal STR starts to read out of data LM 1402, the read address being changed by clock signals Øc, so that the video data of 1 H is read out. The video data read out from LM 1402 is transferred to a multiplexer MPX 1404 over a data bus 1411.

The field memory FM 1403 stores the video data of 1 H through one field. Video data of 1 H is stored in addresses $\underline{n}$ to $(\underline{n} + 639)$. Because the number of picture elements of display 1407 in the horizontal direction is 640, and the video signal of 1 H is regarded as the video data divided into 640 pieces. The following video data of 1 H is stored in the addresses $\underline{n}'$ to $(\underline{n}' + 639)$ where $n' = (n + 640)$. Thus the memory area of FM 1403 is similar to FM 103 shown in Fig. 1. Video data is transferred from FM 1403 over data bus 1412 to MPX 1404.

A signal STWF, applied to a write address counter of FM 1403, starts the writing of video data into FM 1403, the write address being changed by clock signals Øw, so that the video data of 1 H is written. A signal WE controls memory writing. When WE is "1", the memory is in the writing mode, whilst when WE is "0", writing is prevented, and the write address counter is stopped. The signal STWF occurs during the first horizontal term of each field in which the video signal is written, the timing of signal STWF being similar to that of the signal STW applied to LM 1402.

A signal STRF, applied to a read address counter, of FM 1403, starts the reading of video data from FM 1403, the read address being changed by clock signals Øc, so that the video data of 1 H is read out. The video data read from FM 1403 is transferred to MPX 1404 over data bus 1412. A signal SF controls memory reading. When SF is "1", the memory is in the reading mode, whilst when SF is "0", reading is prevented and the read address counter is stopped.

The signal STRF is a pulse signal which occurs during the first horizontal term of each field in which the video signal is read out, the timing being such that the signal STRF rises simultaneously with the rise of the signal SF.

The FM 1402 is a FIFO (First-In First-Out) type memory in which data can be read independently and non-simultaneously with data writing. In a specific embodiment, the memory is a TMS4C1050NL manufactured by TI Corporation.

The multiplexer MPX 1404 selects video data from either LM 1402 or FM 1403 and transfers it to a signal driving circuit DD 1405, under the control of signals SL and SF. When SL is "1", the video data of LM 1402 is selected, and when SF is "0", the video data of FM 1403 is selected. Video data from MPX 1404 is transferred to the signal driving circuit 1405 over a data bus 1413.

The signal driving circuit DD 1405 based on the video data transferred, generates the signal driving signal applied to the columns of display 1407. Because display 1407 has 640 picture elements in the column direction (horizontal direction), the number of output terminals of DD 1405 is 640. A gate network 1414 controls the application of clock signals Øc whilst either signal SL or signal SF is up. DD 1405 is similar to DD 107 described and shown in Fig.3.

A scanning driving circuit SD 1406 generates the scanning driving signal in the line direction (vertical direction), and is similar to SD 108 drscribed and shown in Figs. 4 and 5.

A simultaneous dividing circuit 1408 divides the complex simultaneous signals from the complex video signals by the amplitude dividing technique and has an output to a timing controller TC 1409, which outputs various control signals, using clock signals Øw for LP based on the complex simultaneous signal. The structure of TC 1409 is similar to that of TC 111 described and shown in Fig.6. However, the control signal of display 1407 in the horizontal direction which is output from signal timing circuit 609 shown in Fig. 6 is different.

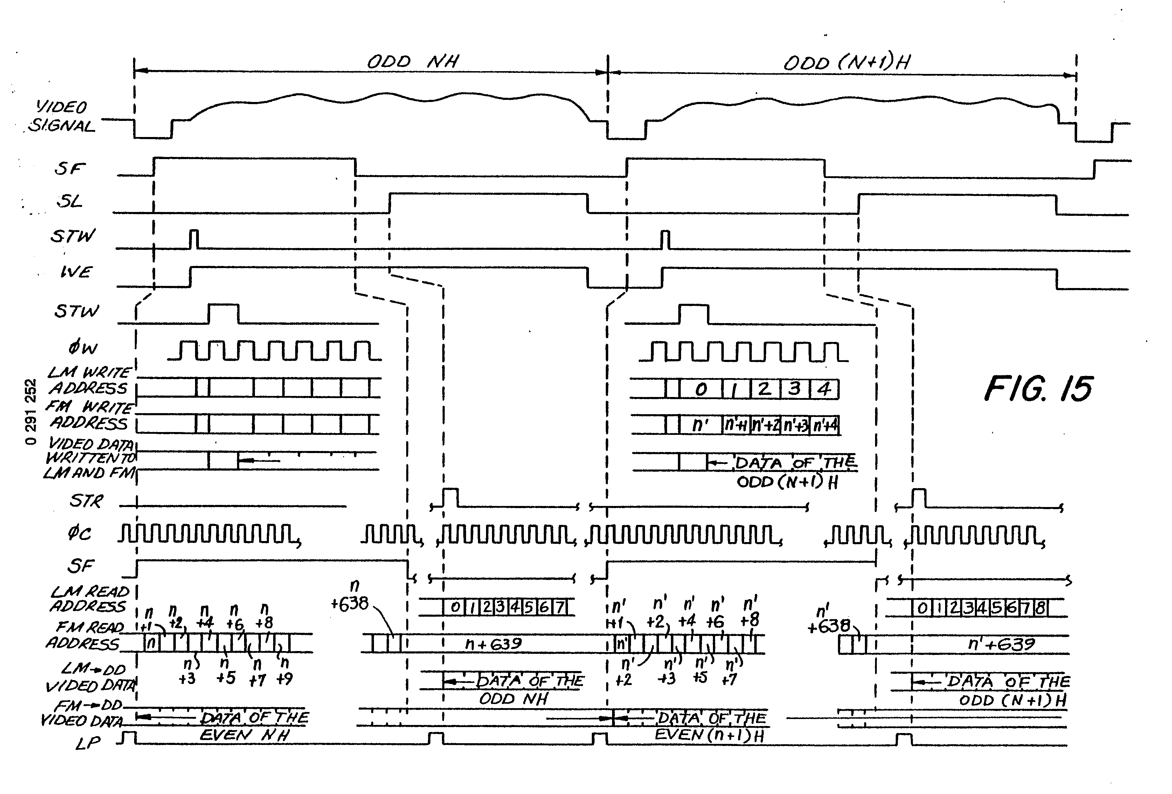

The operation of each part of Fig.14 will now be described with referent to the timing charts of Figs. 15, 16 and 9.

In the timing chart of Fig. 15 of the NH and the (N+1)H of the odd field, signals SF and SL become "1" at the first half and the second half of the horizontal term, respectively. When SF is "1", MPX 1404 selects the video data read out from FM 1403. When SL is "1", MPX 1404 selects the video data read out from LM 1402. Then the video data is transferred to DD 1405.

Signal STW has the same pulse width as one cycle of clock signal Øw and occurs at the starting point of the effective video signal term of each horizontal term 1 H. Signal STR has the same pulse width as one cycle of clock signal Øc and occurs as the signal SL rises. Signal STWF occurs during the each first horizontal term of the odd and the even field, and its timing is the same as that of signal STW. Signal STRF occurs during each first horizontal term of the odd and the even field, and rises simultaneously with the rise of signal SF, having the same pulse width as one cycle of clock signal $\emptyset c$.

The lower portion of Fig. 15 is an enlarged scale on the time axis. In the odd NH, the shift register for writing into LM 1402 is started when STW is "1", and the write address of LM is changed simultaneously with clock signals $\emptyset w$. At the same time, the video data of the odd NH is written in order in LM 1402. The signal WE rises at the same time as the signal STW and continues until the fall of signal SL, so that the write address of FM 1403 is incremented up to the address 640 in each horizontal term, simultaneously with clock signals $\emptyset w$. In the case of the odd NH, the address counter is increased from the address n to the address (n + 639), and the video data is written into corresponding addresses, simultaneously with clock signals $\emptyset w$.

During the first half of each horizontal term, the signal SF is "1" and the read address of FM 1403 is incremented to address 640 simultaneously with clock signals $\emptyset c$, which occur at double the frequency of the clock signals $\emptyset w$. Thus, reading from FM 1403 starts ahead of writing into FM 1403. In the case of the odd NH, the address counter is increased from the address $\underline{n}$ to the address $(\underline{n} + 639)$. Video data of the immediately preceding even NH is read out corresponding to each address, simultaneously with clock signals $\emptyset c$, and then the video data is transferred to DD 1405 over data bus 1413. Subsequently during the second half of each horizontal term, the shift register for reading data from LM 1402 is started by signal STR of "1" whilst SL is "1", the read address of LM 1402 being changed simultaneously with clock signals $\emptyset c$. The video data of the horizontal term is read out to MPX 1404 corresponding to each address, and then the video data is transferred to DD 1405. The signals STWF and STRF for starting writing into and reading out of FM 1403 are not shown in the timing chart of Fig.15. However, they occu during the first horizontal term of the odd and the even field. As described above, the timing of the signal STWF is the same as that of the signal STW, whilst the signal STRF rises simultaneously with the rise of signal SF. The signal STWF is a pulse signal which has the same width as one cycle of clock signal $\emptyset c$. Writing into FM 1403 follows reading from FM 1403. In the timing chart of Fig. 15, the signal SF rises before the signal STW at an intermediate point of the horizontal signal of the video signal. However, because the frequency of clock signals $\emptyset c$ is twice that of clock signals $\emptyset w$, writing data follows reading data even if reading data is started at the same time as writing data. Therefore, even if the timing of signal SF rising is the same as the timing of rising of writing starting signal STW as shown in Fig.7, there is no problems in the system.

In the same manner as above, the video data of the horizontal term is written in LM 1402 and FM 1403, respectively, during the odd (N + 1)H. The write address of FM 1403 is incremented from the address $\underline{n}'$ to the address $n' + 639$ ($\underline{n}' = \underline{n} + 640$). During the first half of the horizontal term, in which signal SF is "1", the read address of FM 1403 is increased from $\underline{n}'$ to $\underline{n}' + 639$. The video data of the even $(n + 1)$H forward-by-one field, which is written in each address $\underline{n}'$ to $\underline{n}' + 639$ is transferred to DD 1405. During the second half of the horizontal term, in which the signal SL is "1", the video data of the horizontal term, written in LM 1402 is read out and then transferred to DD 1405.

For a timing chart of the NH and the (N + 1) H of the even field, the indications of odd and even are reversed in Fig. 15.

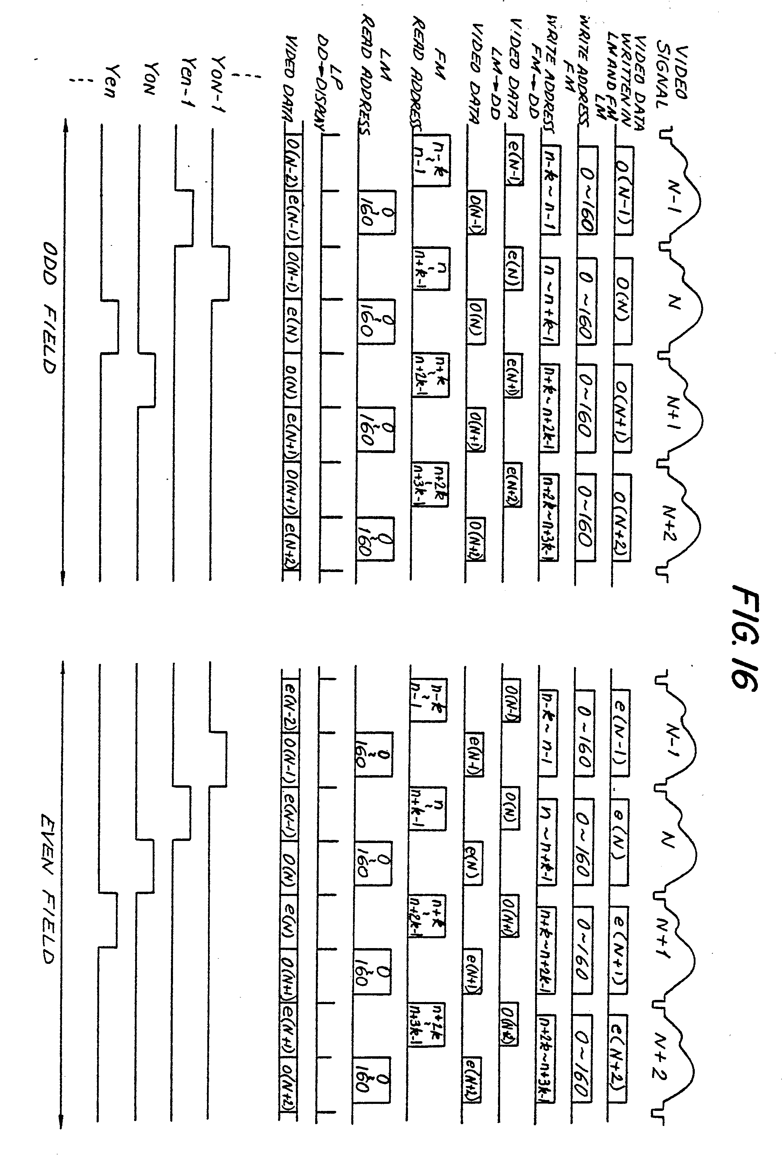

In the timing chart of Fig. 16, k is equivalent to 640. The video data of the odd NH is written in the LM 1402 through 1 H of the odd field. Here, the write address of LM 1402 is accessed from 0 to 160. Similar address access is effected during the other horizontal term. The data is read out of LM 1402 during the second half of the odd NH, and then transferred to DD 1405. Thus, in LM 1402, writing data is followed by reading data.

During the odd NH, the video data of the odd NH is written in 1 H of FM 1403. Here, the write address of FM 1403 is accessed from $\underline{n}$ to $\underline{n} + k\text{-}1$ $(\underline{n} + 639)$. Prior to writing data, reading data starts at the beginning of the odd NH.

During the first half of the odd NH, the read address of FM 1403 is accessed from $\underline{n}$ to $\underline{n} + k\text{-}1$ $(\underline{n} + 639)$, so that the already written data of the even NH forward-by-one field is read out. The other horizontal term is similar as above. Reading data of the horizontal term is followed by writing data. The data of the horizontal term of the even field forward-by-one field is read out and then the data is transferred to DD 1405, so that in FM 1403, reading data is followed by writing data.

The video data transferred to DD 1405 is introduced into a shift register similar to the shift register 301 shown in Fig. 3, and then introduced to a line memory similar to line memory 302 by signal LP. The output of signal driving signal due to each video data of the even NH and the odd NH is delayed by about a half, compared with the term of transferring the video data to DD 1405.

SD 1406 generates the scanning driving signal in the order of $Ye_N\text{-}1$, $Yo_N\text{-}1$, $Ye_N$ and $Yo_N$. Even in the odd field of display 1407, the correct video display can be obtained by compensating the video data of the odd field by the video data of the even field forward-by-one field.

Further, in the even field, SD 1406 generates the scanning driving signal in the order of $Yo_N-1$, $Ye_N-1$, $Yo_N$, $Ye_N$. Therefore, in display 1407, even in the even field, the correct video display can be obtained by compensating the video data of the even field by the video data of the odd field forward by one field.

The further operation of the fourth embodiment will be understood from the previous description of the operation of the first embodiment with reference to Fig. 9.

In a fifth embodiment of video display device for carrying out the method of video display according to the present invention, the device is similar to that of Fig.14, but various signals formed by timing controller TC 1409 are different, the signals for reading the video data from LM 1402 and FM 1403, i.e. Øc, SL, SF, STR, STRF and LP being formed by a timing controller different from TC 1409. The basic structure of the timing controller is similar to that of Fig. 10, except that there is no signal ADS, and signal ADL becomes signal STRF.

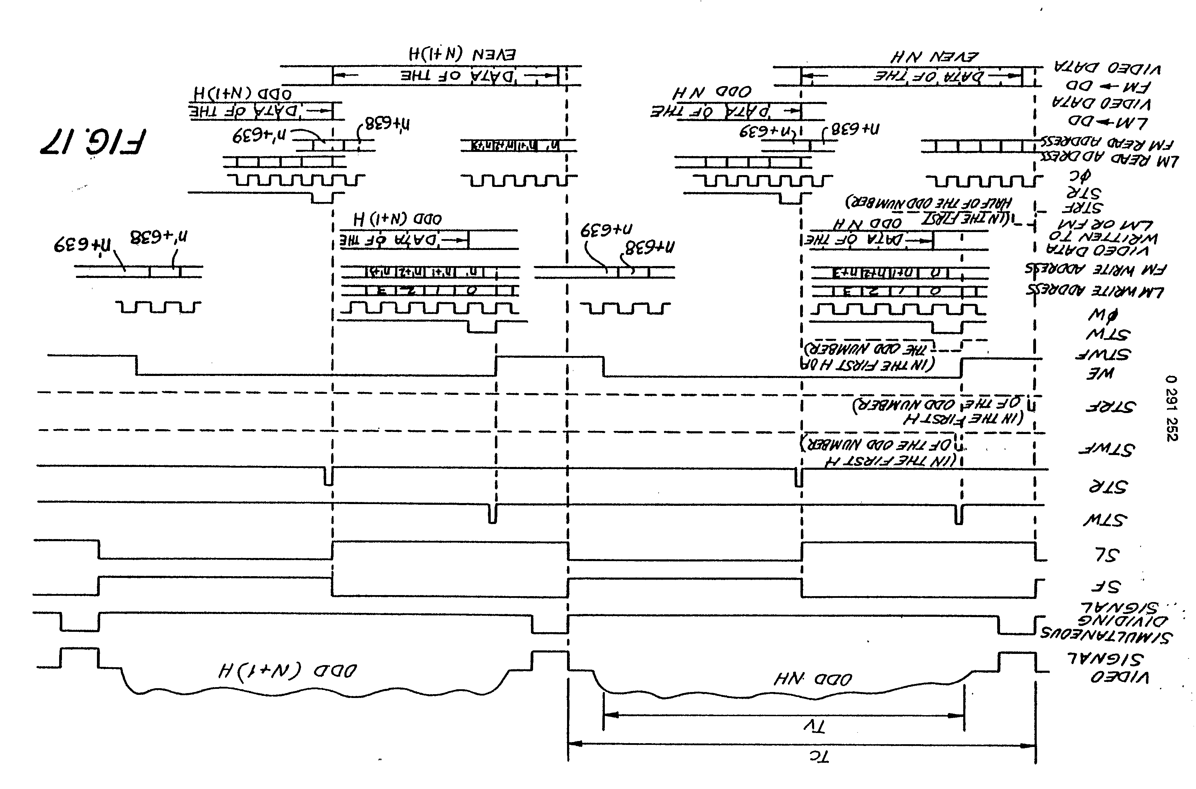

The operation of each signal of the timing controller and the operation of the video display device due to the signals are explained hereafter with reference to a timing chart (Fig. 17) of the NH and the (N + 1) H of the odd field. Signals SF and SL become "1" during the first half and the second half respectively, of the time Tc. When SF is "1", the video data from FM 1403 is read out and transferred to DD 1405. When SL is "1", the video data from LM 1402 is read out and transferred to DD 1405.

When video data starts to be written in LM 1402 by signal STW, the shift register in LM 1402 is started and video data is written successively in each word space in LM 1402 simultaneously with clock signals Øw.

When video data starts to be written in FM 1403 by signal STWF, which occurs during the first horizontal term of each field, and video data is written in FM 1403 simultaneously with clock signals Øw, during the time Tv during which WE is "1".

SF becomes "1" simultaneously with the rise of simultaneous dividing signal, and the video data from FM 1403 is selected by MPX 1404. The starting point of reading out the video data exists at the first horizontal term of each field, and reading is started simultaneously with SF rising by a pulse signal STRF whose width is one cycle of clock signal Øc. Reading is continued during the time during which SF is "1". The address of the read address counter of FM 1403 is changed by clock signals Øc and then the video data of the even NH stored in the addresses n to (n + 639) is read out.

When clock signal Øc has been counted 640 times (that is, after half of Tc from the rising of the simultaneous dividing signal), SF and SL become "0" and "1", respectively. The operation for reading LM 1402 is started simultaneously with the rise of SL by the pulse signal STR whose width is one cycle of clock signal Øc. Then the video data of the odd NH is read out simultaneously with clock signals Øc.

In the same manner, in the odd (N + 1)H, during the first half of the horizontal term Tc, the video data of the even (N + 1)H stored in FM 1403 is transferred to DD 1405 (the video data of the even (N + 1)H stored in the address $\underline{n}'$ to $\underline{n}' + 639$, wherein $\underline{n}' = \underline{n} + 640$). During the second half of the horizontal term Tc, the video data of the odd (N + 1)H stored in LM 1402 is transferred to DD 1405. Here again, the video data is transferred to DD 1405 under the timing of clock signals Øc.

Because clock signals Øc have a frequency of about 20.1 MHZ, as described in the second embodiment, the frequency is lower than that of clock signals Øc in thie fourth embodiment, whose frequency is about 27.2 MHz. Therefore, the consumption of power by the whole system is reduced. Because of the time margins for reading FM 1403, reading LM 1402 and transferring the video data to DD 1405, the design margin is expanded.

In this embodiment, as in the second embodiment, C is equivalent to B. If the positive number C is equivalent or greater than B, i.e. C≥B and Tc/2c>Tv/2B (Tc: the term of complex video signal, Tv: the term of video signal within Tc) instead of C = B (B stands for the number of picture elements which exist in display 1407 in the horizontal direction), the video data can be read out of the video memory at the lowest possible frequency.

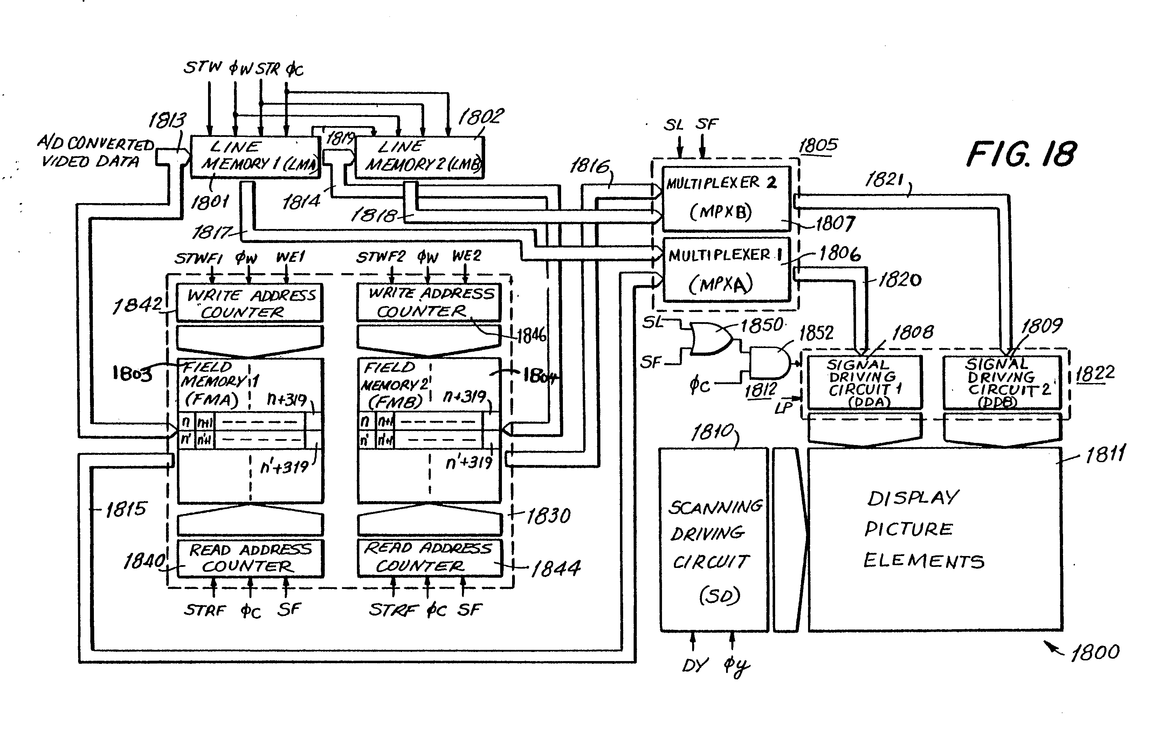

In a sixth embodiment of video display device for carrying out the method of video display according to the present invention (Fig. 18), similar to the embodiment of Fig.12, the line memory comprises two line memories LMA 1801 and LMB 1802, each of which has 4 bit/word x 320 words, if the video data has 4 bits. LMA 1801 stores the video data of the first half of 1 H. LMB 1802 stores the video data of the second half of 1 H. Each of LMA 1801 and LMB 1802 has a structure similar to that of the line memory LM 102 shown in Fig.2. The A/D converted video data is input into LMA 1801 over data bus 1813, and is input into LMB 1802 over data bus 1814. A signal STW starts the writing of video data serially into LMA 1801, and acts as the shift data signal to the internal shift register, the video data being written in order by clock signals Øw. The output from the last column of shift register in LMA 1801 is input over line 1819 into LMB 1802 and acts as the shift data signal of the internal shift register, video data being written in order into LMB 1802 by clock signals Øw. LMA 1801 and LMB 1802 together function as the line memory for storing the video data of 1 H. A signal STR starts reading out from LMA 1801 and LMB 1802, the video data being individually read out from each line memory by clock signals Øc. The video data of the first half of 1 H, which is read out of LMA 1801, is transferred to a multiplexer MPXA 1806 of a multiplexer 1805 over data bus 1817. The video data of the second half of 1 H, which is read out of LMB 1802 is transferred to a second multiplexer MPXB 1807 of multiplexer 1805 over data bus 1818.

The basic structure of each of the field memories FMA 1803 and FMB 1804 is similar to that of the field memory FM 1403 shown in Fig. 14, except that each field memory has the capacity of half a field.

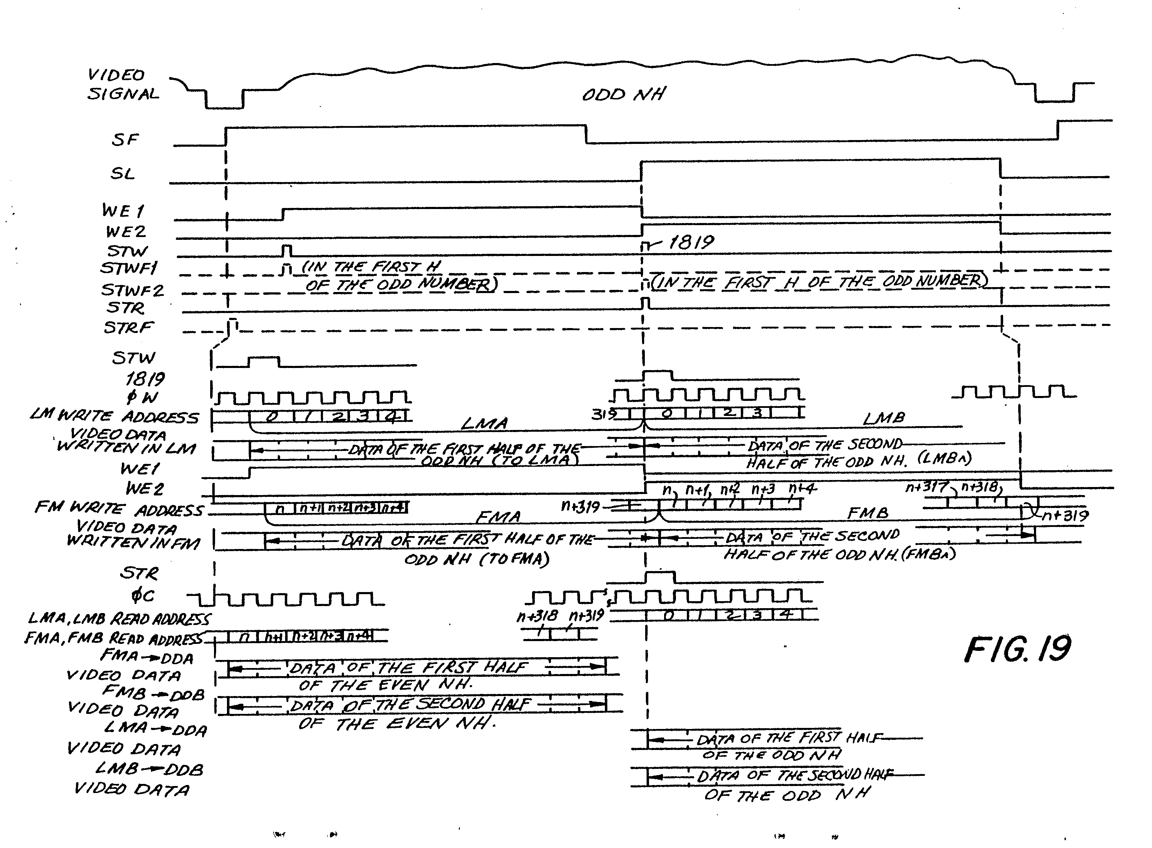

The A/D converted video data is input into FMA 1803 over data bus 1813, and further the video data is input into FMB 1804 over data bus 1814. Signals STWF1 and STWF2 which occur during the first horizontal term of each field start the writing of data into FMA 1803 and FMB 1804 respectively. When signal STWF1 is generated in the first half of 1 H (Fig.19), the writing of video data of the first half of 1 H is started for FMA 1803, and the video data is written simultaneously with clock signals Øw. Writing is carried out during the time during which signal WE1 is "1". Because signal WE1 becomes "1" during the first half of each horizontal term, the video data of the first half of each horizontal term is written in FMA 1803. Subsequently, when the signal STWF2 is generated in the second half of 1 H of each field, writing of the video data of the second half of 1 H is started and the video data is written simultaneously with clock signals Øw. Writing is carried out during the time during which signal WE2 is "1". Because signal WE2 becomes "1" at the start of the second half of each horizontal term, the video data of the second half of each horizontal term is written in FMB 1804. Therefore, in the addresses n to (n+319) of FMA 1803 and in the addresses n to (n+319) of FMB 1804, the video data of 1 H is stored.

The signal STRF starts reading from FMA 1803 and FMB 1804. Signal STRF occurs at the start of the first horizontal term of each field simultaneously with the rise of signal SF, but having the same width as one cycle of clock signal Øc. When the signal STRF is generated, the video data is independently read out by clock signals Øc from each of the field memories FMA 1803 and FMB 1804. Reading is carried out during the time during which signal SF is "1". The video data of the first half of 1 H, which is read out of FMA 1803, is transferred to MPXA 1806 over data bus 1815. The video data of the second half of 1 H, which is read out of FMB 1804, is transferred to MPXB 1807 through data bus 1816. Accordingly, MPXA 1806 corresponds with LMA 1801 and FMA 1803, whilst MPXB 1807 corresponds with LMB 1802 and FMB 1804.

A signal driving circuit 1822 includes two signal driving circuits DDA 1808 and DDB 1809. The internal structure of DDA 1808 and DDB 1809 are similar to that of DD 107 shown in Fig.3. The column number of both the internal shift register and the line memory is 4 bits x 320 columns. As mentioned above, the signal driving circuit DD 1805 generates the driving signal depending on the video signal data for a display 1811. The video data from MPXA 1806 and the video data from MPXB 1807 are input to DDA 1808 and DDB 1809, respectively, over data buses 1820 and 1821, respectively. When signal SL is "1", the video data of LMA 1801 and LMB 1802 are transferred to signal driving circuit 1822. When signal SF is "1", the video data of FMA 1803 and FMB 1804 are transferred to signal driving circuit 1822.

A scanning driving circuit SD 1810 generates the scanning driving signal for display 1811. The internal structure of SD 1810 is similar to that of SD 108 shown in Fig. 5.

The display 1811 is a liquid crystal display and comprises 640 picture elements in the horizontal direction and 440 picture elements in the vertical direction.

The control signals shown in Fig. 18 are supplied from the timing controller (not shown) corresponding to TC 1409 shown in Fig. 14.

The operation of the video display device is hereafter explained with reference to the timing chart of Fig. 19 of the NH of the odd field. Signals SF and SL become "1" at the start of the first half and the second half of the horizontal term, respectively. In MPX 1805, when signal SF is "1", the video data of FMA 1803 and the video data of FMB 1804 are transferred to DDA 1809 and DDB 1808, respectively. When signal SL is "1", the video data of LMA 1801 and the video data of LMB 1802 are transferred to DDA 1809 and DDB 1808, respectively.

The signal STW starts writing of video data into LMA 1801. The video data of the first half of the odd NH is written in order in the LMA 1801, simultaneously with clock signals Øw. The signal on line 1819 for starting writing video data into LMB 1802, is generated from the last column of the shift register in LMB 1801, simultaneously with signal SL rising. LMB 1802 is started by the signal on line 1819, and then the video data of the second half of the odd NH is written in LMB 1802, simultaneously with clock signals Øw.

The video data of LMA 1801 is read out independently from the video data of LMB 1802. The reading operation is started by signal STR whose width is one cycle of clock signal Øc, and which rises simultaneously with the rising of signal SL. Video data is read out simultaneously with clock signals Øc. The video data read out of LMA 1801 is transferred to DDA 1809. The video data read out of LMB 1802 is transferred to DDB 1808.

The operation for writing the video data into FMA 1803 is started by a writing starting signal STWF1, and the video data of the first half of the odd NH is written in the addresses n to (n+319) simultaneously with clock signals Øw. Writing is carried out during the time during which signal WE1 is "1": Signal STWF1 occurs during the first horizontal term of each field, at the same time as the signal STW for starting writing video data into LMA 1801.

Writing of video data into FMB 1804 is started by starting writing signal STWF2, and the video data of the second half of the odd NH is written in the addresses n to (n+319), simultaneously with clock signals Øw. Writing is carried out during the time during which signal WE2 is "1". Signal STWF2 occurs during the first horizontal term of each field, at the same time as the last output of the shift register in LMA 1801 on line 1819. As mentioned above, signal WE1 is "1" during the first half of each horizontal term, and signal WE2 is "1" during the second half of each horizontal term. Therefore, the video data of the first half of each horizontal term is written in FMA 1803, and the video data of the second half of each horizontal term is written in FMB 1804.

Subsequently, the video data in FMA 1803 is read out independently of the video data in FMB 1804. Reading starting signal STRF occurs at the start of the first horizontal term of each field, having the same width as one cycle of clock signal Øc, and rising simultaneously with the rising of signal SF. Reading is started by reading starting signal STRF, and the video data of the first half of the even NH forward-by-one field is read out of FMA 1803. The video data of the second half of the even NH forward-by-one field is read out of FMB 1804. The video data read out of FMA 1803 is transferred to DDA 1808 and the video data read out of FMB 1804 is transferred to DDB 1809. Reading of the video data is carried out during the time during which signal SF is "1".

Video data transferred to DDA 1808 and DDB 1809 is used under the control of gate network 1812 to generate signal driving signal in the signal driving circuit 1822 whilst either signal SL or signal SF is "1" and timed by clock signals Øc. The scanning driving signals are generated from SD 1810 in the order of the even and the odd lines in the odd field, and in the order of the odd and the even lines in the even field.

In the sixth embodiment, the line memory and the field memory comprises two blocks corresponding to the first half and the second half of the video signal of 1 H. Therefore, the clock signals Øc for reading the video data from each video memory are set at the same frequency as clock signals Øw, i.e. fvco/2 ~13.6 MHz in order to simplify the circuit structure. However, the frequency of Øc is twice that used in the fourth embodiment. Accordingly, the consumption power of the system can be reduced and the timing margin in the circuit design is expanded.

Whilst in the sixth embodiment, the memories are divided into two blocks, by following similar concepts, they can be divided into more than two blocks, as will be understood. As disclosed in the fifth embodiment, by reading the video data from memory during the whole of one horizontal term (equivalent to the whole time period Tc), the frequency of reading the video data can be reduced.

In the memory arrangement of a display according to the present invention, the video data of one horizontal line time period is written into a line memory. During the first half of the horizontal line time period, the video data of the corresponding horizontal line time period of the previous field, which is stored in a field memory before the one horizontal line time period, is read out to the display driving circuit. During the second half of the horizontal line time period, the video data of the one horizontal line time period, stored in the line memory, is read out to the display driving circuit. The video data of the one horizontal line time period is written into the field memory so as to constitute the video data for the corresponding horizontal line time period of the next field. This may be read out of the line memory or may be written simultaneously in the line memory and the field memory. In the odd field, the scanning driving circuit generates the scanning driving signal in the order of the even and the odd line. In the even field, the scanning driving circuit generates the scanning driving signal in the order of the odd and even line. By the above driving method, the non-interlace display can be obtained from an interlaced video signal divided into the odd field and the even field, by using a line memory and a field memory. This driving method is greatly improved in the efficiency of the video memory, compared with the conventional driving method. Further, the frequency for replacing the image is 60 Hz, and there are no flicker, even if the display used is a liquid crystal display.

The time period for reading out the video data of one horizontal line time period from the line memory and the field memory may be the whole horizontal line time period of a complex video signal including the horizontal blanking period. Further, each memory may be divided into a plurality of blocks, and when the video data is written in time series, and the video data is read out in parallel from each block, then the clock frequency in reading the video data can be reduced in inverse proportion to the number of blocks into which each memory is divided. Thus, the necessary power consumed can be reduced, because the frequency of read clock signal can be reduced.

The design margin for the functional delay due to the circuit elements expands, because the frequency can be reduced.

The signal frequency can be reduced in the signal driving circuit to which the read video data is transferred from the video memory. Therefore, the consumption power can be reduced, the design margin can be expanded.

## Claims

1. A method of video display, in which the video signal is interlaced and divided into odd and even fields to be transferred, characterised in that the display comprises a line memory (LM) for video data of one line, a field memory (FM) for storing the video data of one field, a signal driving circuit (DD) for generating signal driving signals in response to video data from the line memory or the field memory, and a scanning driving circuit (SD) for generating scanning driving signals for the display, and in that video data of one horizontal line time period is progressively written into the line memory (LM) during the one horizontal line time period, in that during the first part of the one horizontal line time period, the video data of the corresponding line time period of the preceding field which is stored in a predetermined part of the field memory (FM) before the one horizontal line time period, is transferred to the signal driving circuit (DD), and in that during the second part of the one horizontal line time period, the video data stored in the line memory (LM) is transferred to the signal driving circuit (DD).

2. A method according to claim 1, characterised in that during the odd field, scanning driving signals are generated alternately in the order of the even line and the odd line, and in that during the even field, scanning driving signals are generated alternately in the order of the odd line and the even line (Figures 8, 9 and 16).

3. A method according to claim 1 or 2, characterised in that during the second part of the one horizontal line time period, video data of the one horizontal line time period is transferred to the predetermined part of the field memory (FM) from the line memory (LM).

4. A method according to claim 1 or 2, characterised in that during the one horizontal line time period, video data of the one horizontal line time period is written into the predetermined part of the field memory (FM), and transference of video data stored in the predetermined part of the field memory (FM) to the signal driving circuit (DD) precedes the writing of video data into the predetermined part.

5. A method according to any preceding claim, characterised in that the video data portion of the video signal is divided into a plurality of blocks during a horizontal line time period, the line memory and/or the field memory is divided into a plurality of blocks corresponding to the plurality of video signal blocks, the individual blocks (LMA, LMB; FMA, FMB) being connected in series when video data is written into the line memory and/or the field memory, whereby video data is written into the line memory and/or the field memory in series, and the video data in the blocks is read out in parallel.

6. A method according to any preceding claim, characterised in that the video signal is complex and includes a simultaneous signal and a video signal in a time period Tc, the time period Tv of the included video signal being shorter than the time period Tc of the complex video signal, in that writing video data into the line or field memory during the time period Tv is performed at a rate of B per time period Tv, where B is the number of sections into which the video data is divided, in that reading video data of one time period Tv from line or field memory is performed at a rate of 2C per time period T c of the complex video signal, where C is a positive integer equal to or greater than B, and in that $Tc/2C$ is greater than $Tv/2B$.

7. A method according to claim 1, characterised in that the video data is written serially into two blocks (LMA,LMB) of line memory during the first and second parts of the one horizontal line time period, at a given rate of B/Tv, in that during the first part of the one horizontal line time period, video data stored in two blocks (FMA,FMB) of field memory during the corresponding line time period of the preceding field are read out at substantially the same rate B/Tv serially from each block and in parallel from the blocks (FMA,FMB) to two blocks (DDA,DDB) of signal driving circuit, and during the second part of the one horizontal line time period, video data is read out from the two blocks (LMA,LMB) of line memory at substantially the same rate B/Tv serially from each block and in parallel from the blocks (LMA,LMB) to the two blocks (DDA,DDB) of signal driving circuit.

8. A method according to claim 1, characterised in that the video data portion of the complex video signal has a shorter time period Tv than the time period Tc of the whole signal, in that the read out of the field memory (FM) at a faster rate of substantially 2B/Tv starts immediately before the line memory writing begins at the rate of B/Tv, and in that video data being written into the line memory (LM) is also written into the field memory (FM).

9. A method according to claim 1, characterised in the the video data portion of the complex video signal has a shorter time period Tv than the time period Tc of the whole signal, in that the video data is written serially into two blocks (LMA,LMB) of line memory during the first and second parts of the horizontal line time period at a given rate B/Tv, in that video data stored in two blocks (FMA,FMB) of field memory during the corresponding line time period of the preceding field, are read out serially from each block (FMA,FMB) at substantially the same rate B/Tv starting immediately before line memory writing starts at the same rate, and in parallel from the blocks (FMA,FMB) of field memory to two blocks (DDA,DDB) of signal driving circuit, in that video data being written into blocks (LMA,LMB) of line memory are also written into blocks (FMA,FMB) of field memory, and in that during the second part of the one horizontal line time period, such video data is read our serially from each block (FMA,FMB) of field memory at substantially the same rate B/Tv, and in parallel from the blocks (FMA,FMB) to the two blocks (DDA,DDB) of signal driving circuit.

10. A matrix display including a line memory (LM), a field memory (FM), a signal driving circuit (DD) and a scanning driving circuit (SD) adapted to operate in accordance with the method of any of the preceding claims.

11. A video display method of interlace system in which the video signal is divided into the odd and even field to be transferred, said video display comprising: a line memory for storing the video data of one line; a field memory for storing the video data of one field; a signal driving circuit for generating signal driving signals in the response to the video data from said line memory or said field memory; and a scanning driving circuit for generating scanning driving signals of a display; wherein in a horizontal term, said video data of said horizontal term is progressively written in said line memory; g) in the first half of said horizontal term, the video data of one field before, which is stored in the predetermined region A and exists before and after said horizontal term, is transferred to said signal driving circuit; and in the second half of said horizontal term, the video data which is stored in said line memory is transferred to said signal driving circuit.

FIG. 1

0 291 252

FIG. 2

107

119

4 BITS
VIDEO
DATA

DO
D1
D2
D3
CL

301

SHIFT REGISTER
(4 BITS × 640)

128

φc
SL

120

SF

126

LP

302

LINE MEMORY
(4 BITS × 640)

303

PWM SIGNAL
GENERATING CIRCUIT

304

A PLURALITY
OF DIRECT
CURRENT

VOLTAGE
GENERATING CIRCUIT

640 OUTPUTS OF SIGNAL
DRIVING SIGNAL

FIG. 3

# FIG. 4

# FIG. 5

φyo OR φye

DY

A PLURALITY OF DIRECT CURRENT

501

504

D  Q

CL

Y1

502

505

505

D  Q

CL

Y2

VOLTAGE GENERATING CIRCUIT

220 OUTPUT OF SCANNING DRIVING SIGNAL

401 OR 402

# FIG. 6

SIGNAL TIMING CIRCUIT — 609

Outputs: SL  SF  STW  STR  ADS  ADL  EN  LP

$\phi_C$  $\phi_W$

615

VCO — 601
1/2 — 602
1/864 COUNTER — 603

LPF — 604
PC — 605

611

O/E IDENTIFYING CIRCUIT — 606

DIVIDED SIMULTANEOUS SIGNAL

FREQUENCY DIVIDING CIRCUIT — 607

612

1/262 OR 1/263 COUNTER — 608

613

SCANNING TIMING CIRCUIT — 610

DY  $\phi_Y$ ($\phi_{YO}$, $\phi_{YE}$)

111

FIG. 7

# FIG. 8

VIDEO DATA WRITTEN IN LM

FM ADDRESS

FM → DD VIDEO DATA

LM → DD VIDEO DATA

LM → FM VIDEO DATA

LP

DD → DISPLAY VIDEO DATA

YON-1

YeN-1

YON

YeN

ODD FIELD

EVEN FIELD

0 291 252

FIG. 9

FIG. 10

FIG. 11

A/D CONVERTED VIDEO DATA

1216

1201 — LINE MEMORY 1 (LMA)

STW ϕW STR ϕC

1217 1218

1202 — LINE MEMORY 2 (LMB)

1219 1220 1221 1222

*1203*

FIELD MEMORY 1 (FMA)

| n' | | n | n+1 | n'+1 | n+319 | n'+319 |

1204

FIELD MEMORY 2 (FMB)

| n' | | n | n+1 | n'+1 | n+319 |

*1205*

ADDRESS MEMORY (AM) — 1206

ADS  ADL

1223  1224

ADDRESS COUNTER (AC) — 1207

1240

EN
(1)
ϕC

*1208*

MULTIPLEXER 1 (MPXA) — SL SF

MULTIPLEXER 2 (MPXB)

SL
SF
ϕC

1209  1210  1244  1242

*1213*  LP

1211  1212

*1250*

SIGNAL DRIVING CIRCUIT 1 (DDA)

SIGNAL DRIVING CIRCUIT 2 (DDB)

1225  1226

SCANNING DRIVING CIRCUIT (SD) — 1214

DY  ϕy

DISPLAY PICTURE ELEMENTS — 1215

1200

*FIG. 12*

FIG. 13

FIG. 14

FIG. 15

# FIG. 16

**ODD FIELD**

| | | | |
|---|---|---|---|
| VIDEO SIGNAL | N-1 | N | N+1 | N+2 |

VIDEO DATA WRITTEN IN LM AND FM: O(N-1) | O(N) | O(N+1) | O(N+2)

WRITE ADDRESS LM: 0~160 | 0~160 | 0~160 | 0~160

WRITE ADDRESS FM: n-k~n-1 | n~n+k-1 | n+k~n+2k-1 | n+2k~n+3k-1

VIDEO DATA FM→DD: e(N-1) | e(N) | e(N+1) | e(N+2)

VIDEO DATA LM→DD: O(N-1) | O(N) | O(N+1) | O(N+2)

FM READ ADDRESS: n-k ~ n-1 | n ~ n+k-1 | n+k ~ n+2k-1 | n+2k ~ n+3k-1

LM READ ADDRESS: 0~160 | 0~160 | 0~160 | 0~160

LP DD→DISPLAY

VIDEO DATA: O(N-2) | e(N-1) | O(N-1) | e(N) | O(N) | e(N+1) | O(N+1) | e(N+2)

YON-1

Yen-1

YON

Yen

**EVEN FIELD**

| | | | |
|---|---|---|---|
| VIDEO SIGNAL | N-1 | N | N+1 | N+2 |

e(N-1) | e(N) | e(N+1) | e(N+2)

WRITE ADDRESS LM: 0~160 | 0~160 | 0~160 | 0~160

WRITE ADDRESS FM: n-k~n-1 | n~n+k-1 | n+k~n+2k-1 | n+2k~n+3k-1

VIDEO DATA FM→DD: O(N-1) | O(N) | O(N+1) | O(N+2)

VIDEO DATA LM→DD: e(N-1) | e(N) | e(N+1) | e(N+2)

FM READ ADDRESS: n-k ~ n-1 | n ~ n+k-1 | n+k ~ n+2k-1 | n+2k ~ n+3k-1

LM READ ADDRESS: 0~160 | 0~160 | 0~160 | 0~160

VIDEO DATA: e(N-2) | O(N-1) | e(N-1) | O(N) | e(N) | O(N+1) | e(N+1) | O(N+2)

YON-1

Yen-1

YON

Yen

FIG. 17

FIG. 18

FIG. 19